# EUROPEAN PATENT SPECIFICATION

(11) **EP 0 769 169 B1**
(45) Date of publication and mention of the grant of the patent: **22.09.2004**
(21) Application number: 96920136.7
(22) Date of filing: 06.05.1996
(51) Int. Cl.: G06F 9/46

(54) **A NETWORK COMPONENT SYSTEM**
NETZWERKKOMPONENTENSYSTEM
SYSTEME MODULAIRE DE RESEAU

(30) Priority: 05.05.1995 US 435213; 05.05.1995 US 435374; 05.05.1995 US 435671; 05.05.1995 US 435862; 05.05.1995 US 435880
(43) Date of publication of application: 23.04.1997
(60) Divisional application: 04016072.3
(73) Proprietor: APPLE COMPUTER, INC., Cupertino, CA 95014 (US)
(72) Inventor: FISHER, Stephen, Menlo Park, CA 94025 (US); CLERON, Michael, A., Menlo Park, CA 94025 (US); EVANS, John, S., Mountain View, CA 94041 (US); HOLLERAN, Patrick, A., Santa Cruz, CA 95066 (US); FORD, Richard, Arlington, VA 22207 (US); DONNELLY, Richard, J., San Jose, CA 95132 (US); BRUCK, Timo, Mountain View, CA 94043 (US)
(74) Representative: Le Forestier, Eric
(86) International application number: PCT/US1996/006376
(87) International publication number: WO 1996/035991

(56) References cited:
- WO-A-91/07719
- PROCEEDINGS ACM SIGUCCS USER SERVICES CONFERENCE XXII, October 1994, YPSILANTI, MICHIGAN, pages 159-163, XP000604518 BAKER: "Mosaic - Surfing at home and abroad."

## Description

### FIELD OF THE INVENTION

This invention relates generally to computer networks and, more particularly, to an architecture and tools for building Internet-specific services.

### BACKGROUND OF THE INVENTION

The Internet is a system of geographically distributed computer networks interconnected by computers executing networking protocols that allow users to interact and share information over the networks. Because of such wide-spread information sharing, the Internet has generally evolved into an "open" system for which developers can design software for performing specialized operations, or services, essentially without restriction. These services are typically implemented in accordance with a client/server architecture, wherein the clients, e.g., personal computers or workstations, are responsible for interacting with the users and the servers are computers configured to perform the services as directed by the clients.

Not surprisingly, each of the services available over the Internet is generally defined by its own networking protocol. A protocol is a set of rules governing the format and meaning of messages or "packets" exchanged over the networks. By implementing services in accordance with the protocols, computers cooperate to perform various operations, or similar operations in various ways, for users wishing to "interact" with the networks. The services typically range from browsing or searching for information having a particular data format using a particular protocol to actually acquiring information of a different format in accordance with a different protocol.

For example, the file transfer protocol (FTP) service facilitates the transfer and sharing of files across the Internet. The Telnet service allows users to log onto computers coupled to the networks, while the netnews protocol provides a bulletin-board service to its subscribers. Furthermore, the various data formats of the information available on the Internet include JPEG images, MPEG movies and -law sound files.

Two fashionable services for accessing information over the Internet are Gopher and the World-Wide Web ("Web"). Gopher consists of a series of Internet servers that provide a "list-oriented" interface to information available on the networks; the information is displayed as menu items in a hierarchical manner. Included in the hierarchy of menus are documents, which can be displayed or saved, and searchable indexes, which allow users to type keywords and perform searches.

Some of the menu items displayed by Gopher are links to information available on other servers located on the networks. In this case, the user is presented with a list of available information documents that can be opened. The opened documents may display additional lists or they may contain various data-types, such as pictures or text; occasionally, the opened documents may "transport" the user to another computer on the Internet.

The other popular information service on the Internet is the Web. Instead of providing a user with a hierarchical list-oriented view of information, the Web provides the user with a "linked-hypertext" view. Metaphorically, the Web perceives the Internet as a vast book of pages, each of which may contain pictures, text, sound, movies or various other types of data in the form of documents. Web documents are written in HyperText Markup Language (HTML) and Web servers transfer HTML documents to each other through the HyperText Transfer Protocol (HTTP).

The Web service is essentially a means for naming sources of information on the Internet. Armed with such a general naming convention that spans the entire network system, developers are able to build information servers that potentially any user can access. Accordingly, Gopher servers, HTTP servers, FTP servers, and E-mail servers have been developed for the Web. Moreover, the naming convention enables users to identify resources (such as documents) on any of these servers connected to the Internet and allow access to those resources.

As an example, a user "traverses" the Web by following *hot* items of a page displayed on a graphical Web browser. These hot items are hypertext links whose presence are indicated on the page by visual cues, e.g., underlined words, icons or buttons. When a user follows a link (usually by clicking on the cue with a mouse), the browser displays the target pointed to by the link which, in some cases, may be another HTML document.

The Gopher and Web information services represent entirely different approaches to interacting with information on the Internet. One follows a list-approach to information that "looks" like a telephone directory service, while the other assumes a page-approach analogous to a tabloid newspaper. However, both of these approaches include applications for enabling users to browse information available on Internet servers. For example, TurboGopher is a text-based browser application for client computers operating in accordance with the Gopher protocol. Additionally, each of these applications has a unique way of viewing and accessing the information on the servers.

Netscape Navigator ("Netscape") is an example of a monolithic Web browser application that is configured to interact with many of the previously-described protocols, including HTTP, Gopher and FTP. When instructed to invoke an application that uses one of these protocols, Netscape "translates" the protocol to hypertext. This translation places the user farther away from the protocol designed to run the application and, in some cases, actually thwarts the user's Internet experience. For example, a discussion system requiring an interactive exchange between participants may be bogged down by hypertext translations.

Each of these information services provides a mechanism for retaining designated network locations that may be of interest to a user; in Netscape, the mechanism is a *hot* list and in TurboGopher, it is a bookmark. These location retaining mechanisms, however, are not generally configured to interact with applications other than their own, primarily due to the monolithic nature of the Netscape and TurboGopher applications. Thus, it is difficult to replace the hot list and bookmark by similar mechanisms provided by other developers; furthermore, the monolithic nature of the applications generally precludes extension of the functions and behaviours of these mechanisms other than by those developers associated with the respective services.

Each of these information services also provides a mechanism for keeping track of places explored while navigating the computer networks. For example, Netscape has a log mechanism which typically manifests as a pop-up menu that shows recent places a user has explored. These mechanisms, however, are not generally configured to interact with applications other than their own, primarily due to the monolithic nature of the Netscape and TurboGopher applications. Thus, it is difficult to replace the logs with similar mechanisms provided by other developers; furthermore, the monolithic nature of the applications generally precludes extension of the functions and behaviours of these mechanisms other than by those developers associated with the respective services.

Each of these information services may also provide a mechanism for specifying an address or path to access a particular network resource; in Netscape, a command *open location* may specified to "transport" a user to that resource location and in TurboGopher, the command *another Gopher* allows a user to type Gopher-specific address information to transport the user to the specified location. These resource specifying mechanisms, however, are not generally configured to interact with applications other than their own, primarily due to the monolithic nature of the Netscape and TurboGopher applications. Thus, it is difficult to replace these mechanisms with similar mechanisms provided by other developers; furthermore, the monolithic nature of the applications generally precludes extension of the functions and behaviours of these mechanisms other than by those developers associated with the respective services.

The Gopher and Web services may further require additional applications to perform specific functions, such as playing sound or viewing movies, with respect to the data types contained in the documents. For example, Netscape employs helper applications for executing applications having data formats it does not "understand". Execution of these functions on a computer requires interruption of processing and context switching (i.e., saving of state) prior to invoking the appropriate application. Thus, if a user operating within the Netscape application "opens" a MPEG movie, that browsing application must be saved (e.g., to disk) prior to opening an appropriate MPEG application, e.g., Sparkle, to view the image. Such an arrangement is inefficient and rather disruptive to execution of the application program.

Typically, a computer includes an operating system and application software which, collectively, control the operations of the computer. The applications are preferably task-specific and independent, e.g., a word processor application edits words, a drawing application edits drawings and a database application interacts with information stored on a database storage unit. Although a user can move data from one application to the other, such as by copying a drawing into a word processing file, the independent applications must be invoked to thereafter manipulate that data. This is primarily because the applications are designed as monolithic autonomous modules that generally do not interact efficiently.

Generally, the application program presents information to a user through a window of a graphical user interface by drawing images, graphics or text within the window region. The user, in turn, communicates with the application by "pointing" at graphical objects in the window with a pointer that is controlled by a hand-operated pointing device, such as a mouse, or by pressing keys of a keyboard.

The graphical objects typically included with each window region are sizing boxes, buttons and scroll bars. These objects represent user interface elements that the user can point at with the pointer (or a cursor) to select or manipulate. For example, the user may manipulate these elements to move the windows around on the display screen, and change their sizes and appearances so as to arrange the window in a convenient manner. When the elements are selected or manipulated, the underlying application program is informed, via the window environment, that control has been appropriated by the user.

A menu bar is a further example of a user interface element that provides a list of menus available to a user. Each menu, in turn, provides a list of command options that can be selected merely by pointing to them with the mouse-controlled pointer. That is, the commands may be issued by actuating the mouse to move the pointer onto or near the command selection, and pressing and quickly releasing, i.e., "clicking" a button on the mouse.

Command options in the menus typically act on one or more objects. If an application requires more information to carry out a command, a dialog box may be employed. A dialog box is a special type of window that elicits information from the user, such as requiring the user to check items or fill in the blanks, typically through the use of a graphical object that the user can manipulate with the mouse. Such an object is called a control and, by manipulating the control, the user can take an immediate action or change a setting to modify a future action. A modal dialog box requires that the user respond to the elicitation prior to performing other actions.

In contrast to this typical application-based computing environment, a software component architecture provides a modular document-based computing arrangement using tools such as viewing editors. The key to document-based computing is the compound document, i.e., a document composed of many different types of data sharing the same file. The types of data contained in a compound document may range from text, tables and graphics to video and sound. Several editors, each designed to handle a particular data type or format, can work on the contents of the document at the same time, unlike the application-based computing environment.

Since many editors may work together on the same document, the compound document is apportioned into individual modules of content for manipulation by the editors. The compound-nature of the document is realized by embedding these modules within each other to create a document having a mixture of data types. The software component architecture provides the foundation for assembling documents of differing contents and the present invention is directed to a system for extending this capability to network-oriented services.

To remotely access information stored on a resource of the network, the user typically invokes a service configured to operate in accordance with a protocol for accessing the resource. In particular, the user types an explicit destination address command that includes a uniform resource locator (URL). The URL is a rather long (approximately 50 character) address pointer that identifies both a network resource and a means for accessing that resource. The following is an example of a hypothetical URL address pointer to a remote resource on a Web server:
*http:*/*aaaa.bbb.cc*/*hypertext*/*DdddEeeee*/*WWW*/*Ffffffff.html*

It is apparent that having to type such long destination address pointers can become quite burdensome for users that frequently access information from remote resources.

Thus, the prior networking applications suffer from some shortcomings.

### SUMMARY OF THE INVENTION

The subject matter of the protection sought by the current application is specified by the appended set of claims 7.

The invention comprises a network component system. In a first embodiment, an encapsulated network entity is created containing a reference to a network resource located on a computer network. This encapsulated network entity allows information associated with that network resource to be accessed efficiently. The encapsulated entity is preferably implemented as a network component stored on a computer remotely displaced from the referenced resource. In addition, the encapsulated entity can be manifested as a visual object on a graphical user interface of a computer screen. Such visual manifestation allows a user to easily manipulate the entity in order to display the contents of the resource on the screen or to electronically forward the entity over the network.

In a second embodiment, the invention comprises a notebook component of an extensible and replaceable network-oriented component system for recording a location of a resource coupled to a computer network. The location is recorded as an item in the notebook component, which is preferably a compound document stored on the user's computer. The notebook and items are typically represented by visual objects. e.g., icons, that can be manipulated to display their contents on a computer screen. That is, the notebook may be opened to display a list of its items and an item may be opened to display the contents of the referenced resource.

In a third embodiment, the invention comprises a log component of an extensible and replaceable network oriented component system for maintaining a list of locations explored by a user when navigating a computer network, in addition to organizing various "views" of the list to provide a mental "routing map" relationship between the explored locations. The locations are recorded as items in the log component, which is preferably a compound document stored on the user's computer. The log and items are typically represented by visual objects, e.g., icons, that can be manipulated to display their contents on a computer screen. That is, the log may be opened to display a list of its items and an item may be opened to display the contents of the explored location.

In a fourth embodiment, the invention comprises a connection dialog component of an extensible and replaceable network-oriented component system that enables a user to specify address information of a particular resource coupled to a computer network. The connection dialog component is preferably a compound document that is manifested as a dialog box having a list of selectable service types with associated dialog view components. Each dialog view component has at least one field for receiving appropriate address information provided by a user to successfully connect to the particular network resource.

In a fifth embodiment, the invention comprises a network-oriented component system for developing a customized user interface that displays information obtained from a resource of a computer network on a computer screen. The customized user interface is provided by embedding an entity that references a resource located on the networks into any component of the system. The embedded entity is preferably manifested as a visual object, e.g., an icon, a button or an area of the computer screen, displayed on a graphical user interface of the screen that a user may manipulate to effectuate the embedding process. The "container" component, on the other hand, is preferably a compound document having contents that include different data types and formats.

### BRIEF DESCRIPTION OF THE DRAWINGS

The above and further advantages of the invention may be better understood by referring to the following description in conjunction with the accompanying drawings in which:
Fig. 1 is a block diagram of a network system including a collection of computer networks interconnected by client and server computers;
Fig. 2 is a block diagram of a client computer, such as a personal computer, on which the invention may advantageously operate;
Fig. 3 is a block diagram of the server computer of Fig. 1;
Fig. 4 is a highly schematized block diagram of a layered component computing arrangement in accordance with the invention;
Fig. 5 is an illustration of basic primitives for defining the layout of a compound document;
Fig. 6 is a schematic illustration of the interaction of a component, a software component layer and an operating system of the computer of Fig. 2;
Fig. 7 is a schematic illustration of the interaction between a component, a component layer and a window manager in accordance with the invention;
Fig. 8 is a schematic diagram of an illustrative encapsulated network item or entity object or network "item" in accordance with the invention;
Fig. 9 illustrates a simplified class hierarchy diagram illustrating classes CyberExtension, CyberNotebookExtension, CyberlogExtension, CyberConfirmationExtension, and CyberConnectExtension;
Fig. 10 is a simplified class hierarchy diagram illustrating a base class CyberItem, and its associated subclasses, used to construct network component objects in accordance with the invention;
Fig. 11 is a simplified class hierarchy diagram illustrating a base class CyberStream, and its associated subclasses, in accordance with the invention;
Fig. 12 is a simplified class hierarchy diagram illustrating a base class CyberExtension, and its associated subclasses, in accordance with the present invention;
Figs. 13A-13D are highly schematized diagrams illustrating the interactions between the network component objects, including the encapsulated network entity object of Fig. 8;
Fig. 14 is an illustrative flowchart of the sequence of steps involved in invoking, and accessing, information from a referenced network resource;
Fig. 15 is a schematic illustration of the contents of the replaceable and extensible notebook component according to the invention;
Fig. 16 is a schematic diagram of an illustrative dialog box used to create a category in the notebook component;
Fig. 17 is a schematic diagram of an illustrative modal dialog box used to specify a particular notebook and category for inserting the network item of Fig. 8 in accordance with the invention;
Fig. 18 is a schematic illustration of the contents of the replaceable and extensible log component according to the invention;
Figs. 19A-19B are schematic diagrams of illustrative alphabetic and hierarchical views of the novel log component box in accordance with the invention;
Fig. 20 is a simplified class hierarchy diagram illustrating a base class CyberService, and its associated subclasses, in accordance with the invention;
Fig. 21 is a schematic illustration of the connection dialog as manifested on a computer screen according to the invention;
Figs. 22A-22D are schematic diagrams of illustrative dialog boxes associated with services specified by the novel connection dialog component according to the invention.
Fig. 23 depicts a folder containing selected components for building a compound document;
Fig. 24 illustrates a compound document displayed in a window of a computer screen;
Fig. 25 depicts the connection of a network resource to a button component used to build the compound document of Fig. 24; and
Fig. 26 illustrates a completed customized network interface document in accordance with the invention.

### DETAILED DESCRIPTION OF ILLUSTRATIVE EMBODIMENT

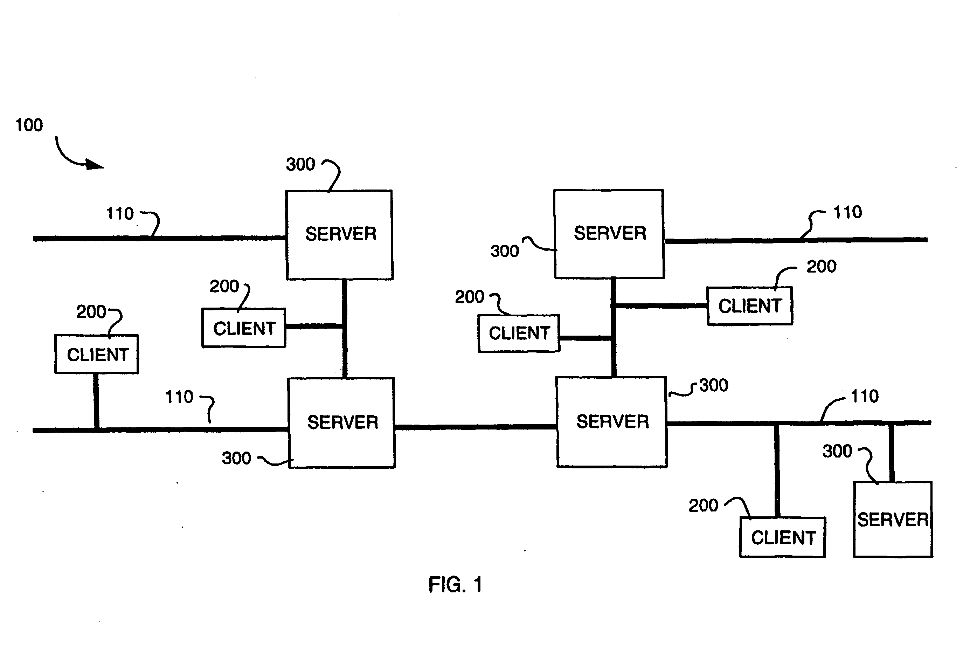

Fig. 1 is a block diagram of a network system 100 comprising a collection of computer networks 110 interconnected by client computers ("clients") 200, e.g., workstations or personal computers, and server computers ("servers") 300. The servers are typically computers having hardware and software elements that provide resources or services for use by the clients 200 to increase the efficiency of their operations. It will be understood to those skilled in the art that, in an alternate embodiment, the client and server may exist on the same computer; however, for the illustrative embodiment described herein, the client and server are separate computers.

Several types of computer networks 110, including local area networks (LANs) and wide area networks (WANs), may be employed in the system 100. A LAN is a limited area network that typically consists of a transmission medium, such as coaxial cable or twisted pair, while a WAN may be a public or private telecommunications facility that interconnects computers widely dispersed. In the illustrative embodiment, the network system 100 is the Internet system of geographically distributed computer networks.

Computers coupled to the Internet typically communicate by exchanging discrete packets of information according to predefined networking protocols. Execution of these networking protocols allow users to interact and share information across the networks. As an illustration, in response to a user's request for a particular service, the client 200 sends an appropriate information packet to the server 300, which performs the service and returns a result back to the client 200.

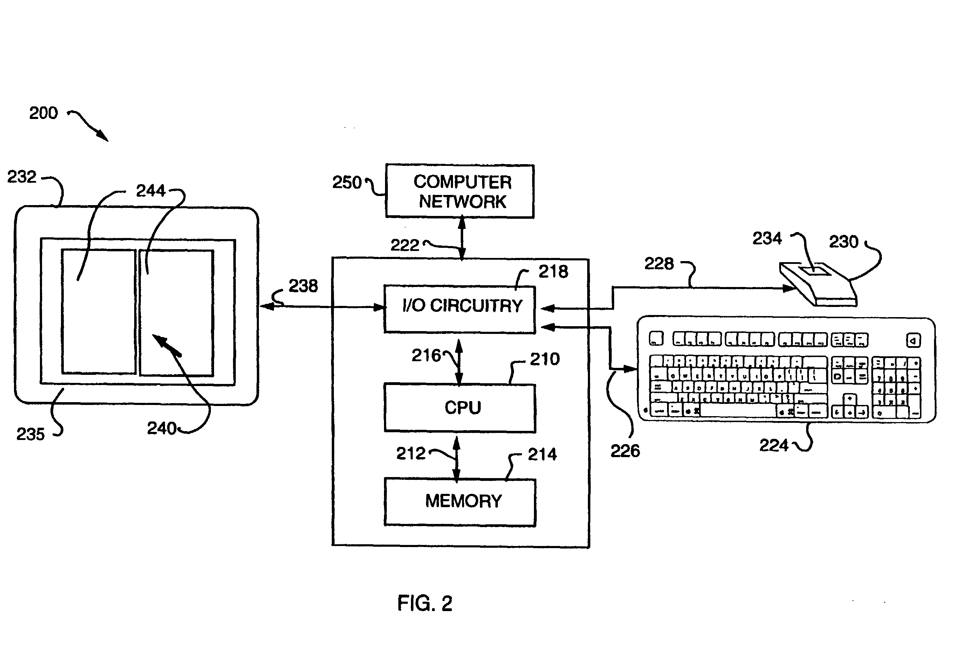

Fig. 2 illustrates a typical hardware configuration of a client 200 comprising a central processing unit (CPU) 210 coupled between a memory 214 and input/output (I/O) circuitry 218 by bidirectional buses 212 and 216. The memory 214 typically comprises random access memory (RAM) for temporary storage of information and read only memory (ROM) for permanent storage of the computer's configuration and basic operating commands, such as portions of an operating system (not shown). As described further herein, the operating system controls the operations of the CPU 210 and client computer 200.

The I/O circuitry 218, in turn, connects the computer to computer networks, such as the Internet computer networks 250, via a bidirectional bus 222 and to cursor/pointer control devices, such as a keyboard 224 (via cable 226) and a mouse 230 (via cable 228). The mouse 230 typically contains at least one button 234 operated by a user of the computer. A conventional display monitor 232 having a display screen 235 is also connected to I/O circuitry 218 via cable 238. A pointer (cursor) 240 is displayed on windows 244 of the screen 235 and its position is controllable via the mouse 230 or the keyboard 224, as is well-known. Typically, the I/O circuitry 218 receives information, such as control and data signals, from the mouse 230 and keyboard 224, and provides that information to the CPU 210 for display on the screen 235 or, as described further herein, for transfer over the Internet 250.

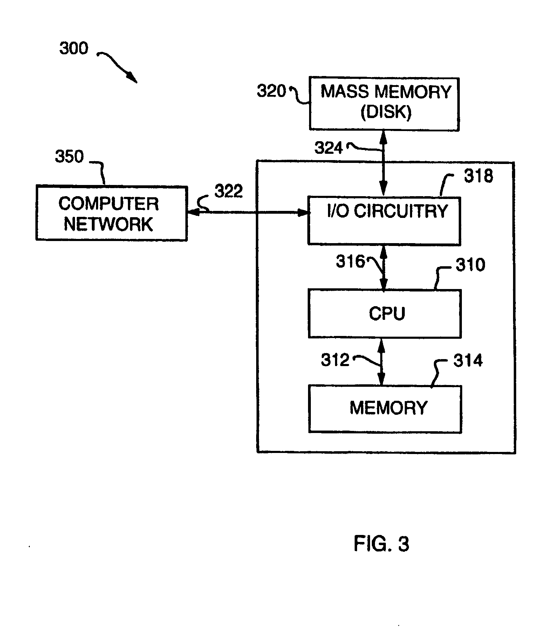

Fig. 3 illustrates a typical hardware configuration of a server 300 of the network system 100. The server 300 has many of the same units as employed in the client 200, including a CPU 310, a memory 314, and I/O circuitry 318, each of which are interconnected by bidirectional buses 312 and 316. Also, the I/O circuitry connects the computer to computer networks 350 via a bidirectional bus 322. These units are configured to perform functions similar to those provided by their corresponding units in the computer 200. In addition, the server typically includes a mass storage unit 320, such as a disk drive, connected to the I/O circuitry 318 via bidirectional bus 324.

It is to be understood that the I/O circuits within the computers 200 and 300 contain the necessary hardware, e.g., buffers and adapters, needed to interface with the control devices, the display monitor, the mass storage unit and the networks. Moreover, the operating system includes the necessary software drivers to control, e.g., network adapters within the I/O circuits when performing I/O operations, such as the transfer of data packets between the client 200 and server 300.

The computers are preferably personal computers of the Macintosh series of computers sold by Apple Computer Inc., although the invention may also be practiced in the context of other types of computers, including the IBM series of computers sold by International Business Machines Corp. These computers have resident thereon, and are controlled and coordinated by, operating system software, such as the Apple System 7, IBM OS2, or the Microsoft Windows operating systems.

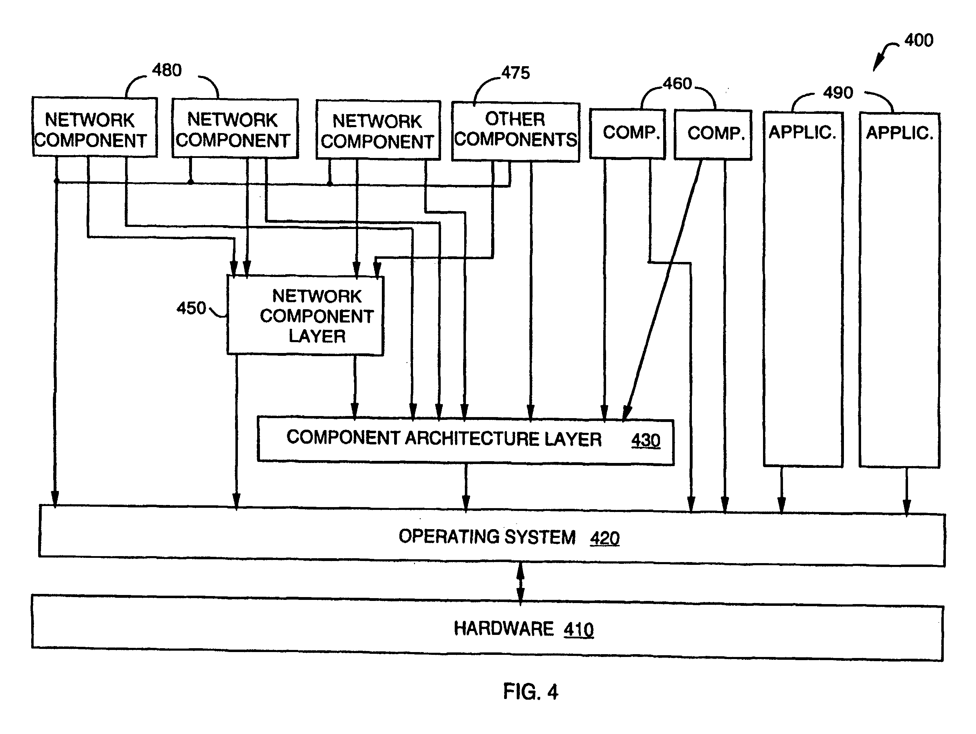

As noted, the present invention is based on a modular document computing arrangement as provided by an underlying software component architecture, rather than the typical application-based environment of prior computing systems. Fig. 4 is a highly schematized diagram of the hardware and software elements of a layered component computing arrangement 400 that includes the novel network-oriented component system of the invention. At the lowest level there is the computer hardware, shown as layer 410. Interfacing with the hardware is a conventional operating system layer 420 that includes a window manager, a graphic system, a file system and network-specific interfacing, such as a TCP/IP protocol stack and an Apple-talk protocol stack.

The software component architecture is preferably implemented as a component architecture layer 430. Although it is shown as overlaying the operating system 420, the component architecture layer 430 is actually independent of the operating system and, more precisely, resides side-by-side with the operating system. This relationship allows the component architecture to exist on multiple platforms that employ different operating systems.

In accordance with the present invention, a novel network-oriented component layer 450 contains the underlying technology which enables: 1) creating encapsulated entity components that contain references to network resources located on computer networks; 2) an extensible replaceable network components systems of such as a notebook component that stores locations of resources coupled to computer networks, such as the Internet; 3) a log component that maintains a list of locations explored by a user when navigating such computer networks; 4) a connection dialog component that allows a user to specify an address of a particular resource coupled to such computer networks; and/or 5) a network-oriented component system configured to develop customized user interfaces to computer networks by embedding entities that reference resources located on such networks into components of the system. As described further herein, communication among these components is achieved through novel application programming interfaces (APIs) that facilitate communication among the entities components to ensure integration with the underlying component architecture layer 430 and allows the components to be replaced identified or unidentified by other components. These novel APIs are preferably delivered in the form of objects in a class hierarchy.

It should be noted that the network component layer 450 may operate with any existing system-wide component architecture, such as the Object Linking and Embedding (OLE) architecture developed by the Microsoft Corporation; however, in the illustrative embodiment, the component architecture is preferably OpenDoc, the vendor-neutral, open standard for compound documents developed by, among others, Apple Computer, Inc.

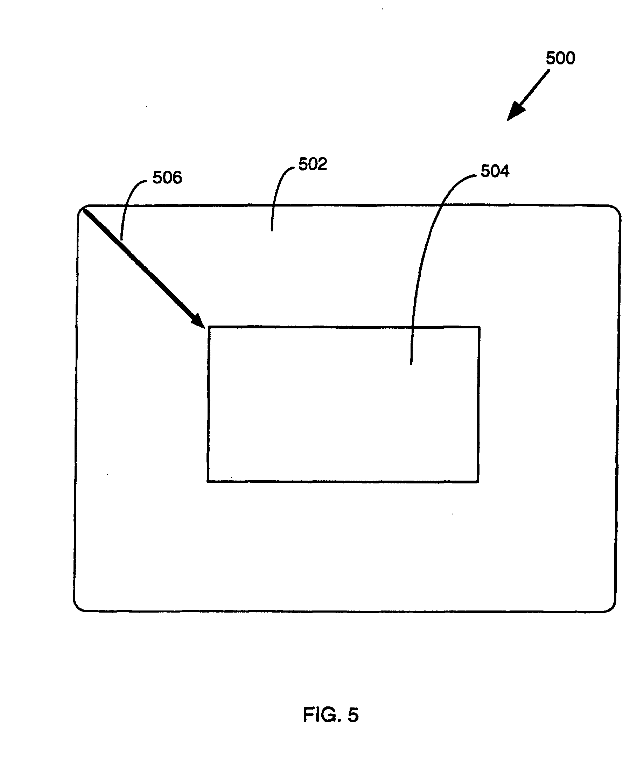

Using tools such as viewing editors, the component architecture layer 430 creates a compound document composed of data having different types and formats. Each differing data type and format is contained in a fundamental unit called a computing part or, more generally, a "component" 460 comprised of a viewing editor along with the data content. An example of the computing component 460 may include a MacDraw component. The component editor, on the other hand, is analogous to an application program in a conventional computer. That is, the editor is a software component which provides the necessary functionality to display a component's contents and, where appropriate, present a user interface for modifying those contents. Additionally, the editor may include menus, controls and other user interface elements. An internal layout element of the component architecture layer 430 is used to organize these contents of a compound document and, further, to distinguish boundaries between editors. The layout element, in turn, comprises three data structures which form primitives for defining the layout of such a document. Referring to Fig. 5, these structures include a canvas, a frame and a transformation.

Specifically, the canvas 502 is a data structure which represents the overall context of the document. It includes a description of coordinate space and a mechanism for capturing a series of graphical commands into an image or representation. Examples of canvasses are a bit or pixel map on a computer screen, a page description language for a printer and a display list for a computer display. The frame 504, on the other hand, is a data structure which serves as a shared information repository between a "container" component and an embedding component.

A transformation is a data structure which represents a set of geometric descriptions that are applied to graphical commands. In the example of Fig. 5, the transformation is depicted as an offset 506 from a reference point, e.g., the upper left-hand corner of the canvas 502. Other types of transformations include scaling, rotation, skews and distortions. In general, the transformation is a geometric description of the location and orientation of the frame 504 on the canvas 502. Preferably, this description can be two-dimensional or three-dimensional in nature.

Referring again to Fig. 4, the network component layer 450 extends the functionality of the underlying component architecture layer 430 by defining key integrating network-oriented components 480, or any other component(s) 475 such as the notebook component. As noted, a feature of the invention is the ability to easily extend, replace or modify the notebook component of the layered computing arrangement 400 with a different notebook-type component to provide a user with a customized network-related service offering. This feature is made possible by the cooperating relationship between the network component layer 450 and its underlying component architecture layer 430. The integrating components communicate and interact with these various components of the system in a "seamlessly integrated" manner to provide basic tools for navigating the Internet computer networks.

Fig. 4 also illustrates the relationship of applications 490 to the elements of the layered computing arrangement 400. Although they reside in the same "user space" as the components 460 and network components 480, the applications 490 do not interact with these elements and, thus, interface directly to the operating system layer 420. Because they are designed as monolithic, autonomous modules, applications (such as previous Internet browsers) often do not even interact among themselves. In contrast, the components of the arrangement 400 are designed to work together via the common component architecture layer 430 or, in the case of the network components, via the novel network component layer 450.

Specifically, the invention features the provision of the extensible and replaceable network-oriented component system which, when invoked, causes actions to take place that enhance the ability of a user to interact with the computer to obtain information available over computer networks such as the Internet. The information is manifested to a user via a window environment, such as the graphical user interface provided by System 7 or Windows, that is preferably displayed on the screen 235 (Fig. 2) as a graphical display to facilitate interactions between the user and the computer, such as the client 200. This behavior of the system is brought about by the interaction of the network components with a series of system software routines associated with the operating system 420. These system routines, in turn, interact with the component architecture layer 430 to create the windows and graphical user interface elements, as described further herein.

The window environment is generally part of the operating system software 420 that includes a collection of utility programs for controlling the operation of the computer 200. The operating system, in turn, interacts with the components to provide higher level functionality, including a direct interface with the user. A component makes use of operating system functions by issuing a series of task commands to the operating system via the network component layer 450 or, as is typically the case, through the component architecture layer 430. The operating system 420 then performs the requested task. For example, the component may request that a software driver of the operating system initiate transfer of a data packet over the networks 250 or that the operating system display certain information on a window for presentation to the user.

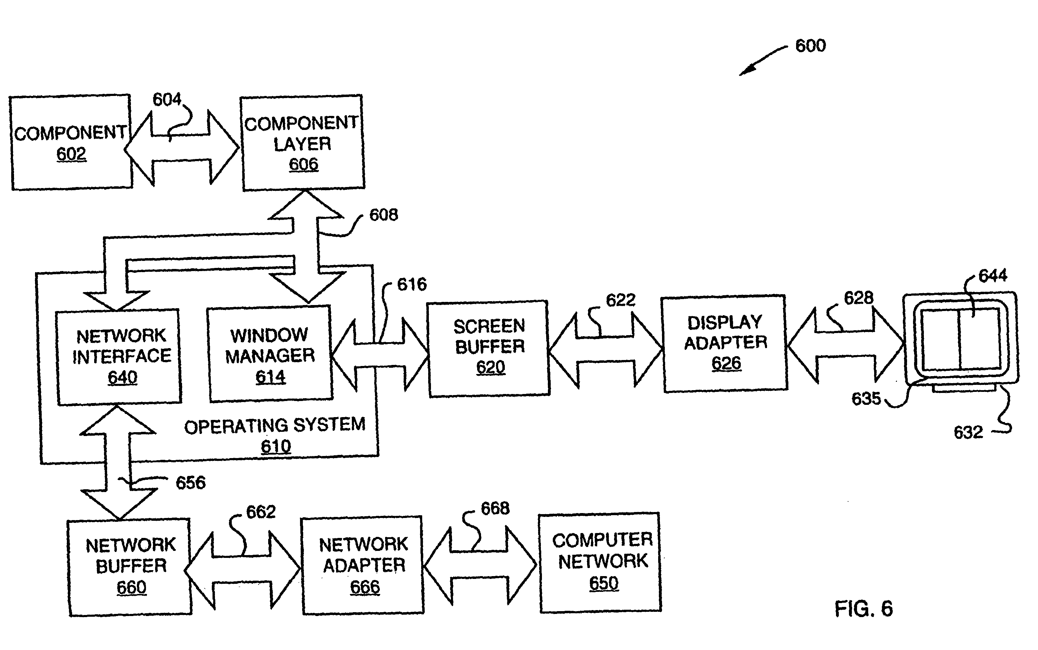

Fig. 6 is a schematic illustration of the interaction of a component 602, software component layer 606 and an operating system 610 of a computer 600, which is similar to, and has equivalent elements of, the client computer 200 of Fig. 2. As noted, the network component layer 450 (Fig. 4) is integrated with the component architecture layer 430 to provide a cooperating architecture that allows the novel notebook component to be replaced, extended or modified by other notebook-type components; accordingly, for purposes of the present discussion, the layers 430 and 450 may be treated as a single software component layer 606.

The component 602, component layer 606 and operating system 610 interact to control and coordinate the operations of the computer 600 and their interaction is illustrated schematically by arrows 604 and 608. In order to display information on a screen display 635, the component 602 and component layer 606 cooperate to generate and send display commands to a window manager 614 of the operating system 610. The window manager 614 stores information directly (via arrow 616) into a screen buffer 620.

The window manager 614 is a system software routine that is generally responsible for managing windows 644 that the user views during operation of the network component system. That is, it is generally the task of the window manager to keep track of the location and size of the window and window areas which must be drawn and redrawn in connection with the network component system of the present invention.

Under control of various hardware and software in the system, the contents of the screen buffer 620 are read out of the buffer and provided, as indicated schematically by arrow 622, to a display adapter 626. The display adapter contains hardware and software (sometimes in the form of firmware) which converts the information in the screen buffer 620 to a form which can be used to drive a display screen 635 of a monitor 632. The monitor 632 is connected to display adapter 626 by cable 628.

Similarly, in order to transfer information as a packet over the computer networks, the component 602 and component layer 606 cooperate to generate and send network commands, such as remote procedure calls, to a network-specific interface 640 of the operating system 610. The network interface comprises system software routines, such as "stub" procedure software and protocol stacks, that are generally responsible for formatting the information into a predetermined packet format according to the specific network protocol used, e.g., TCP/IP or Apple-talk protocol.

Specifically, the network interface 640 stores the packet directly (via arrow 656) into a network buffer 660. Under control of the hardware and software in the system, the contents of the network buffer 660 are provided, as indicated schematically by arrow 662, to a network adapter 666. The network adapter incorporates the software and hardware, i.e., electrical and mechanical interchange circuits and characteristics, needed to interface with the particular computer networks 650. The adapter 666 is connected to the computer networks 650 by cable 668.

In a preferred embodiment, the invention described herein is implemented in an object-oriented programming (OOP) language, such as C++ , using System Object Model (SOM) technology and OOP techniques. The C++ and SOM languages are well-known and many articles and texts are available which describe the languages in detail. In addition, C++ and SOM compilers are commercially available from several vendors. Accordingly, for reasons of clarity, the details of the C++ and SOM languages and the operations of their compilers will not be discussed further in detail herein.

As will be understood by those skilled in the art, OOP techniques involve the definition, creation, use and destruction of "objects". These objects are software entities comprising data elements and routines, or functions, which manipulate the data elements. The data and related functions are treated by the software as an entity that can be created, used and deleted as if it were a single item. Together, the data and functions enable objects to model virtually any real-world entity in terms of its characteristics, which can be represented by the data elements, and its behavior, which can be represented by its data manipulation functions. In this way, objects can model concrete things like computers, while also modeling abstract concepts like numbers or geometrical designs.

Objects are defined by creating "classes" which are not objects themselves, but which act as templates that instruct the compiler how to construct an actual object. A class may, for example, specify the number and type of data variables and the steps involved in the functions which manipulate the data. An object is actually created in the program by means of a special function called a "constructor" which uses the corresponding class definition and additional information, such as arguments provided during object creation, to construct the object. Likewise objects are destroyed by a special function called a "destructor". Objects may be used by manipulating their data and invoking their functions.

The principle benefits of OOP techniques arise out of three basic principles: encapsulation, polymorphism and inheritance. Specifically, objects can be designed to hide, or encapsulate, all, or a portion of, its internal data structure and internal functions. More specifically, during program design, a program developer can define objects in which all or some of the data variables and all or some of the related functions are considered "private" or for use only by the object itself. Other data or functions can be declared "public" or available for use by other programs. Access to the private variables by other programs can be controlled by defining public functions for an object which access the object's private data. The public functions form a controlled and consistent interface between the private data and the "outside" world. Any attempt to write program code which directly accesses the private variables causes the compiler to generate an error during program compilation which error stops the compilation process and prevents the program from being run.

Polymorphism is a concept which allows objects and functions that have the same overall format, but that work with different data, to function differently in order to produce consistent results. Inheritance, on the other hand, allows program developers to easily reuse pre-existing programs and to avoid creating software from scratch. The principle of inheritance allows a software developer to declare classes (and the objects which are later created from them) as related. Specifically, classes may be designated as subclasses of other base classes. A subclass "inherits" and has access to all of the public functions of its base classes just as if these functions appeared in the subclass. Alternatively, a subclass can override some or all of its inherited functions or may modify some or all of its inherited functions merely by defining a new function with the same form (overriding or modification does not alter the function in the base class, but merely modifies the use of the function in the subclass). The creation of a new subclass which has some of the functionality (with selective modification) of another class allows software developers to easily customize existing code to meet their particular needs.

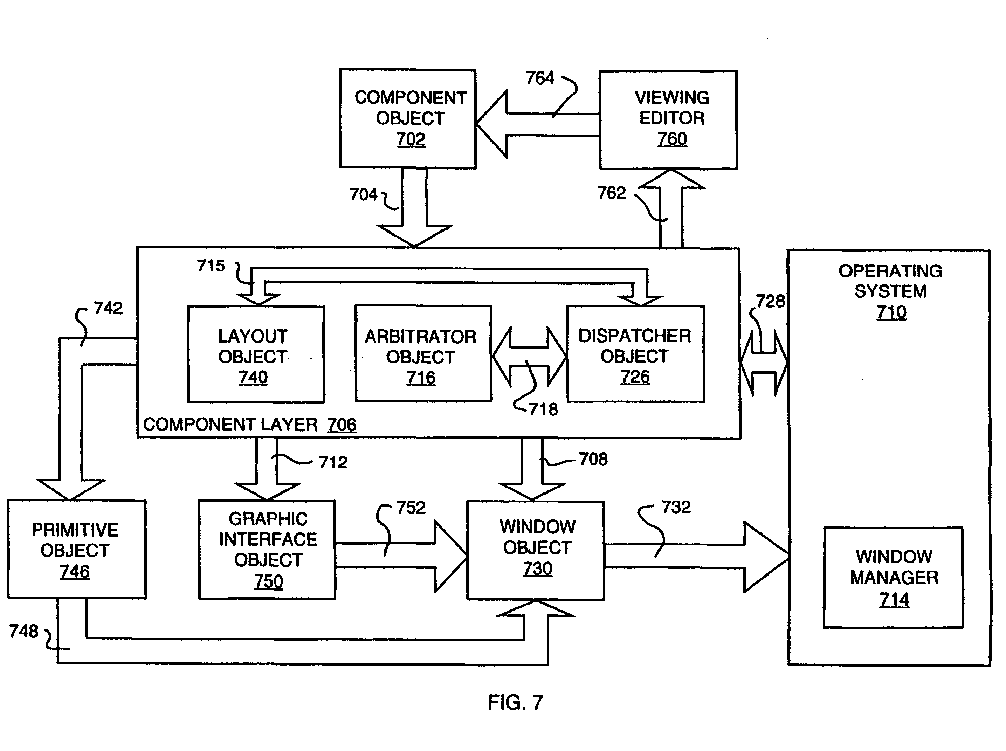

In accordance with the present invention, the component 602 and windows 644 are "objects" created by the component layer 606 and the window manager 614, respectively, the latter of which may be an object-oriented program. Interaction between a component, component layer and a window manager is illustrated in greater detail in Fig. 7.

In general, the component layer 706 interfaces with the window manager 714 by creating and manipulating objects. The window manager itself may be an object which is created when the operating system is started. Specifically, the component layer creates window objects 730 that cause the window manager to create associated windows on the display screen. This is shown schematically by an arrow 708. In addition, the component layer 706 creates individual graphic interface objects 750 that are stored in each window object 730, as shown schematically by arrows 712 and 752. Since many graphic interface objects may be created in order to display many interface elements on the display screen, the window object 730 communicates with the window manager by means of a sequence of drawing commands issued from the window object to the window manager 714, as illustrated by arrow 732.

As noted, the component layer 706 functions to embed components within one another to form a compound document having mixed data types and formats. Many different viewing editors may work together to display, or modify, the data contents of the document. In order to organize the contents of the document and distinguish boundaries between the editors, the component layer 706 includes an internal layout element 740. The layout element is an object that comprises data structures such as a canvas, a frame and a transformation, each of which form primitive objects 746 for defining the layout of the document. These primitive objects are also stored in each window object 730, as shown schematically by arrows 742 and 748.

Moreover, in order to direct keystrokes and mouse events initiated by a user to the proper components and editors, the component layer 706 includes an arbitrator 716 and a dispatcher 726. The dispatcher is an object that communicates with the operating system 710 to identify the correct viewing editor 760, while the arbitrator is an object that informs the dispatcher as to which editor "owns" the stream of keystrokes or mouse events. Specifically, the dispatcher 726 receives these "human-interface" events from the operating system 710 (as shown schematically by arrow 728), and communicates with the arbitrator and layout objects (as shown schematically by arrows 718 and 715) to deliver the events to the correct viewing editor 760 via arrow 762. The viewing editor 760 then modifies or displays, either visually or acoustically, the contents of the data types.

Although OOP offers significant improvements over other programming concepts, software development still requires significant outlays of time and effort, especially if no pre-existing software is available for modification. Consequently, a prior art approach has been to provide a developer with a set of predefined, interconnected classes which create a set of objects and additional miscellaneous routines that are all directed to performing commonly-encountered tasks in a particular environment. Such predefined classes and libraries are typically called "frameworks" and essentially provide a pre-fabricated structure for a working document.

For example, a framework for a user interface might provide a set of predefined graphic interface objects which create windows, scroll bars, menus, etc. and provide the support and "default" behavior for these interface objects. Since frameworks are based on object-oriented techniques, the predefined classes can be used as base classes and the built-in default behavior can be inherited by developer-defined subclasses and either modified or overridden to allow developers to extend the framework and create customized solutions in a particular area of expertise. This object-oriented approach provides a major advantage over traditional programming since the programmer is not changing the original program, but rather extending the capabilities of that original program. In addition, developers are not blindly working through layers of code because the framework provides architectural guidance and modeling and, at the same time, frees the developers to supply specific actions unique to the problem domain.

There are many kinds of frameworks available, depending on the level of the system involved and the kind of problem to be solved. The types of frameworks range from high-level frameworks that assist in developing a user interface, to lower-level frameworks that provide basic system software services such as communications, printing, file systems support, graphics, etc. Commercial examples of application-type frameworks include MacApp (Apple), Bedrock (Symantec), OWL (Borland), NeXT Step App Kit (NeXT) and Smalltalk-80 MVC (ParcPlace).

While the framework approach utilizes all the principles of encapsulation, polymorphism, and inheritance in the object layer, and is a substantial improvement over other programming techniques, there are difficulties which arise. These difficulties are caused by the fact that it is easy for developers to reuse their own objects, but it is difficult for the developers to use objects generated by other programs. Further, frameworks generally consist of one or more object "layers" on top of a monolithic operating system and even with the flexibility of the object layer, it is still often necessary to directly interact with the underlying system by means of awkward procedure calls.

In the same way that a framework provides the developer with prefab functionality for a document, a system framework, such as that included in the preferred embodiment, can provide a prefab functionality for system level services which developers can modify or override to create customized solutions, thereby avoiding the awkward procedural calls necessary with the prior art frameworks. For example, consider a customizable network interface framework which can provide the foundation for browsing and accessing information over a computer network. A software developer who needed these capabilities would ordinarily have to write specific routines to provide them. To do this with a framework, the developer only needs to supply the characteristic and behavior of the finished output, while the framework provides the actual routines which perform the tasks.

A preferred embodiment takes the concept of frameworks and applies it throughout the entire system, including the document, component, component layer and the operating system. For the commercial or corporate developer, systems integrator, or OEM, this means all of the advantages that have been illustrated for a framework, such as MacApp, can be leveraged not only at the application level for things such as text and graphical user interfaces, but also at the system level for such services as printing, graphics, multi-media, file systems and, as described herein, network-specific operations.

Referring again to Fig. 7, the window object 730 and the graphic interface object 750 are elements of a graphical user interface of a network component system having a customizable framework for greatly enhancing the ability of a user to efficiently access information from a network resource on computer networks by creating an encapsulated entity that contains a reference to that resource. The encapsulated entity is preferably implemented as a network component of the system and stored as a visual object, e.g., an icon, for display on a graphical user interface. Such visual display allows a user to easily manipulate the entity component to display the contents of the resource on a computer screen or to electronically forward the entity over the networks.

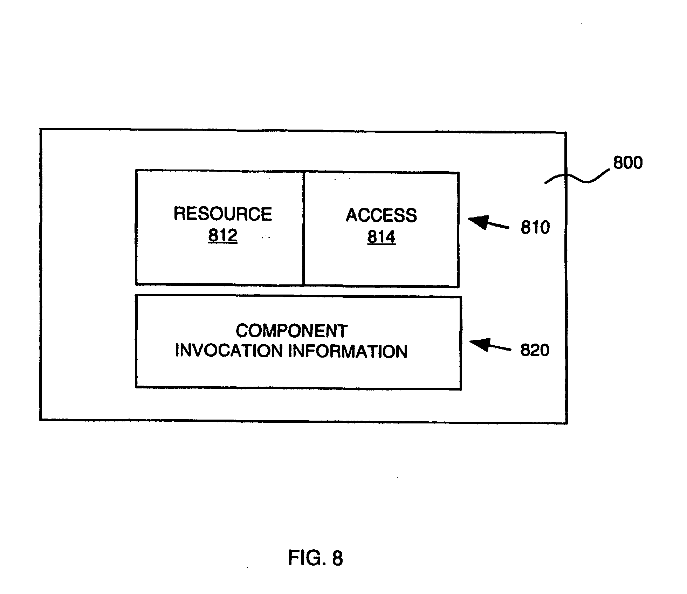

Furthermore, the reference to a network resource is a pointer that identifies the network address of the resource, e.g., a Gopher browser, a Web page or an E-mail message. Fig. 8 is a schematic diagram of an illustrative encapsulated network entity object or network item 800 containing a pointer 810. In one embodiment of the invention, the pointer may be a uniform resource locator (URL) having a first portion 812 that identifies the particular network resource and a second portion 814 that specifies the means for accessing that resource. It is to be understood, however, that other representations of a "pointer" are included within the principles of the invention, e.g., a Post Office Protocol (POP) account and message identification (ID).

In addition to storing the pointer, the encapsulated entity or network item may also contain information 820 for invoking appropriate network components needed to access the resource. Communication among these network components is achieved through novel application programming interfaces (APIs). These APIs are preferably delivered in the form of objects in a class hierarchy that is extensible so that developers can create new components. From an implementation viewpoint, the objects can be subclassed and can inherit from base classes to build customized components that allow users to see different kinds of data using different kinds of protocols, or to create components that function differently from existing components.

In accordance with the invention, the customized framework has a set of interconnected abstract classes for defining network-oriented objects used to build the customized network components. These abstract classes include *CyberItem*, *CyberStream* and *CyberExtension* and the objects they defme are used to build the novel network components. A description of these abstract classes is provided in copending and commonly assigned U.S. patent application titled *Extensible, Replaceable Network Component System,* United States Patent Application No. 08/435,377 filed May 5, 1995, which application is incorporated by reference as though fully set forth herein.

Specifically, the CyberItem class defines the encapsulated entity object which interacts with objects defined by the other abstract classes of the network system to "transport" the user to the network location, i.e., remotely access information from the referenced resource and display that information to the user at the computer. Since these objects are integral elements of the cooperating component architecture, any type of encapsulated network entity may be developed with consistent behaviors, i.e., these entities may be manifested as visual objects that can be distributed and manipulated iconically.

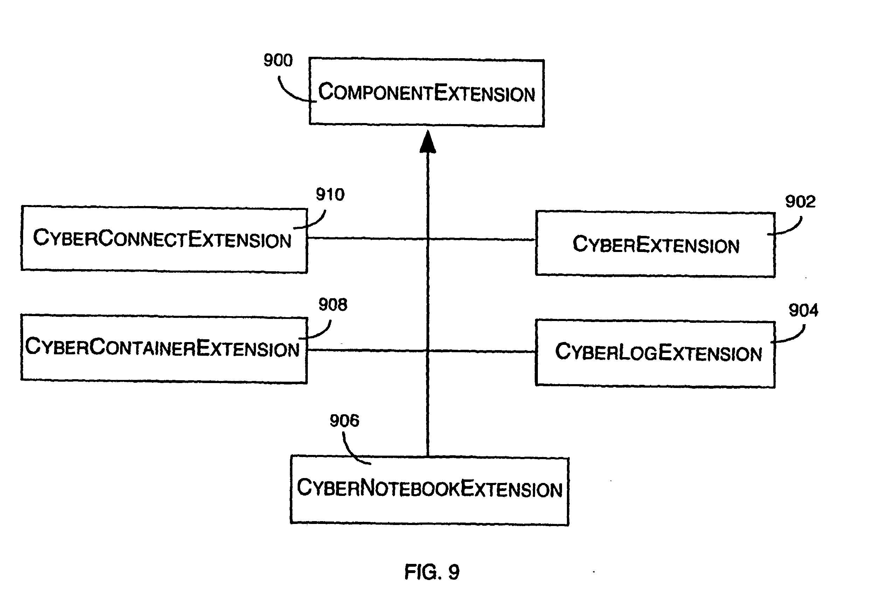

Other classes include those illustrated in Figure 9. Fig. 9 illustrates a simplified class hierarchy diagram of, *inter alia,* the classes CyberExtension 902 and CyberNotebookExtension 906 used to construct the notebook network component object 602. CyberExtension objects are the mechanisms for adding functionality to, and extending the APIs of, e.g., computing components so that they may communicate with the novel network components. Accordingly, the CyberExtension class 902 is a subclass of a ComponentExtension base class 900, which defines the generic behaviors of extensions to the computing components. The CyberNotebookExtension class 906 is also a subclass of the base class ComponentExtension 900 and the objects defined by this class are used to build components having the replaceable and extensible behaviors of the novel notebook.

Specifically, the CyberExtension class provides an API for accessing other network-type components, such as the notebooks, and for supporting graphical user interface elements, such as menus. CyberExtension objects are also used by components that display the contents of CyberItem objects. The CyberNotebookExtension class, on the other hand, provides an API for transposing any component into a notebook component. The methods associated with the CyberNotebook Extension class include (the arguments have been omitted for simplicity):
AddCyberItemToNotebook ();
AddCyberItemsToNotebook ();
ShowNotebookWindow ();
IsNotebookWindowShown ().

In the illustrative embodiment of the invention, the notebook is utilized as a local storage repository on a client computer for users to store (as items) references to places "visited" on the network that are of particular interest. For example, a user may store, in the notebook, a reference to a specific document page on a Web server, or to a picture or text file on an FTP server. Thereafter, to quickly and efficiently return to the locations referenced by the items, the user merely double-clicks on any of the icons representing these stored items. It should be understood that only references to locations or network-based objects may be stored in the notebook; the actual document or file, such as an application or picture, are not typically stored in the notebook.

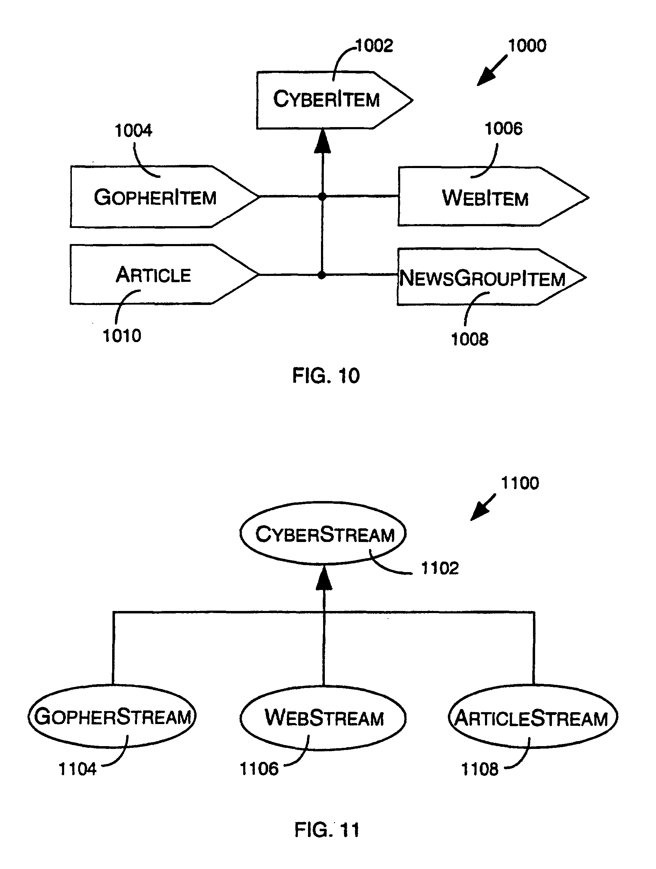

Fig. 10 illustrates a simplified class hierarchy diagram 1000 of the base class CyberItem 1002 used to construct the encapsulated network entity component object 802. In accordance with the illustrative embodiment, subclasses of the CyberItem base class are used to construct various network component objects configured to provide such services for the novel network-oriented component system. For example, the subclass GopherItem 1004 is derived from the CyberItem class 1002 and encapsulates a network entity component object representing a "thing in Gopher space", such as a Gopher directory.

Since each of the classes used to construct these network component objects are subclasses of the CyberItem base class, each class inherits the functional operators and methods that are available from that base class. Accordingly, methods associated with the CyberItem base class for, e.g., instructing an object to open itself, are assumed by the subclasses to allow the network components to display CyberItem objects in a consistent manner.

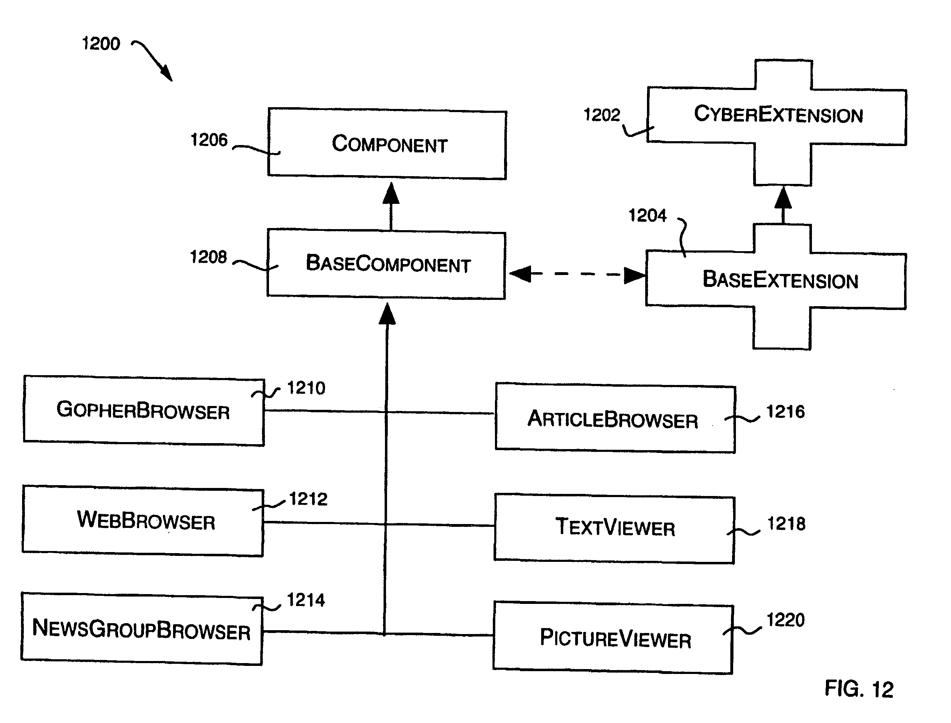

In some instances, a CyberItem object may need to spawn a CyberStream object in order to obtain the actual data for the object it represents. Fig. 11 illustrates a simplified class hierarchy diagram 1100 of the base class CyberStream 1102 which is an abstraction that serves as an API between a component configured to display a particular data format and the method for obtaining the actual data. Specifically, a CyberStream object contains the software commands necessary to create a "data stream" for transferring information from one object to another. According to the invention, a GopherStream subclass 1104 is derived from the CyberStream base class 1102 and encapsulates a network object that implements the Gopher protocol.

### Network Entity Referencing in the Network Component System

Fig. 12 is a simplified class hierarchy diagram 1200 of the base class CyberExtension 1202 which represents additional behaviors provided to components of the underlying software component architecture. For example, CyberExtension objects add functionality to, and extend the APIs of, existing components so that they may communicate with the novel network components, such as the encapsulated entity objects. As a result, the CyberExtension base class 1202 operates in connection with a Component base class 1206 through their respective subclasses BaseExtension 1204 and BaseComponent 1208.

CyberExtension objects are used by components that display the contents of CyberItem objects; this includes browser-like components, such as a Gopher browser or Web browser, along with viewer-like components, such as JPEG, MPEG or text viewers. The CyberExtension objects also keep track of the CyberItem objects which these components are responsible for displaying. In accordance with the invention, the class GopherBrowser 1210 may be used to construct a Gopher-like network browsing component and the class WebBrowser 1212 may be used to construct a Web-like network browsing component.

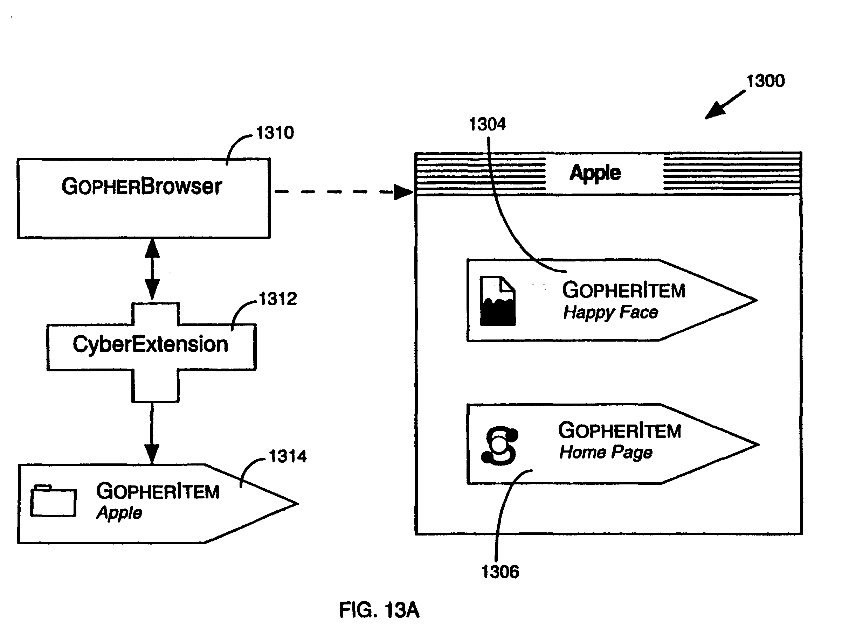

Figs. 13A-13D are highly schematized diagrams illustrating the interactions between the novel network-oriented components, including the encapsulated (CyberItem) network entity component according to the invention. It is to be understood that the components described herein are objects constructed from the interconnected abstract classes. In general, a user has "double clicked" on an icon of a graphical user interface 1300 displayed on a computer screen. The icon represents, e.g., a Gopher directory displayed in a Gopher browser application. Initially, a GopherBrowser component 1310 displays two icons representing CyberItem components, the icons labeled (GopherItem) *Happy Face* 1304 and (GopherItem) *Home Page* 1306. These latter components represent the contents of a Gopher directory labeled (GopherItem) *Apple* 1314.

In Fig. 13A, the left side of the diagram illustrates a GopherBrowser component 1310 that is displayed on the computer screen, i.e., the right side of the diagram. The GopherBrowser component has a CyberExtension component 1312 which keeps track of the GopherItem components. When the user double clicks on the *Home Page* GopherItem icon 1306, the GopherBrowser component 1310 receives this event and issues a call to an "Open" method of a *Home Page* GopherItem component; this call instructs the GopherItem component 1306 to open itself.

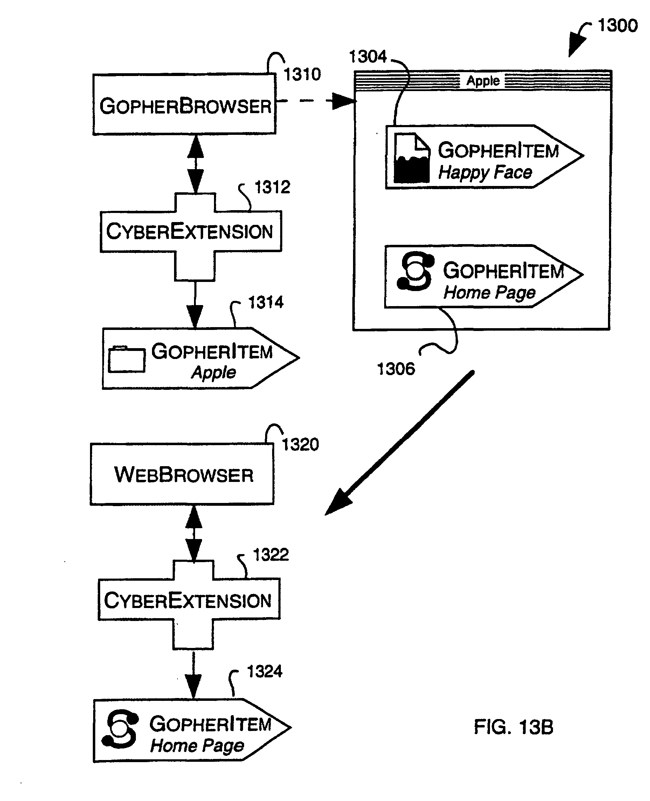

Specifically, and referring to Fig. 13B, the GopherItem component 1306 creates a component of the appropriate type to display itself. For this example, the GopherItem preferably creates a WebBrowser component 1320. Once created, the WebBrowser component further creates a CyberExtension component 1322 for storing the *Home Page* GopherItem component (now shown at 1324). In accordance with the invention, the *Home Page* GopherItem component is a network entity containing a pointer that points to the network address of a Gopher server storing the appropriate Web page.

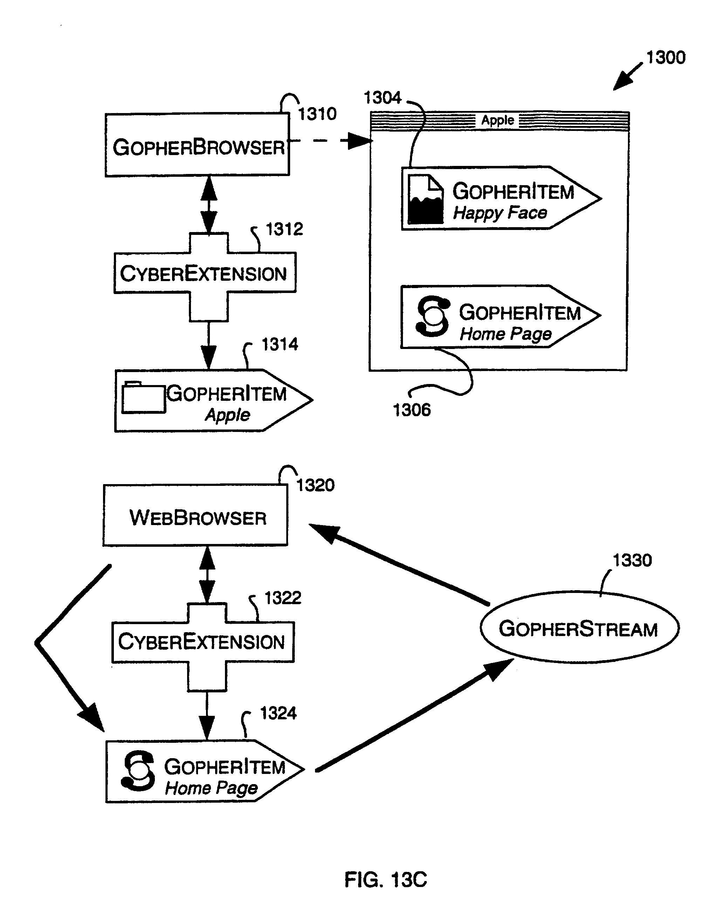

In Fig. 13C, the CyberExtension component 1322 then notifies the WebBrowser component 1320 that it has been assigned a GopherItem component 1324 to display. The WebBrowser component 1320 calls a method *CreateCyberStream* of the GopherItem to create a GopherStream component 1330 for downloading the appropriate data. Thereafter, the WebBrowser component 1320 begins asychronously downloading an HTML document from the appropriate Gopher server (not shown).

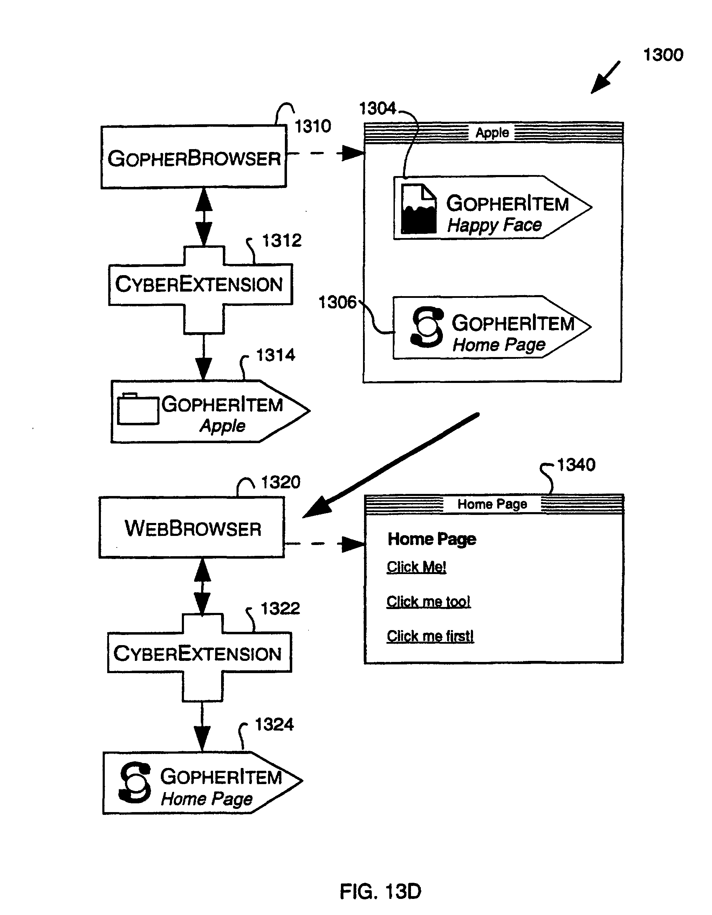

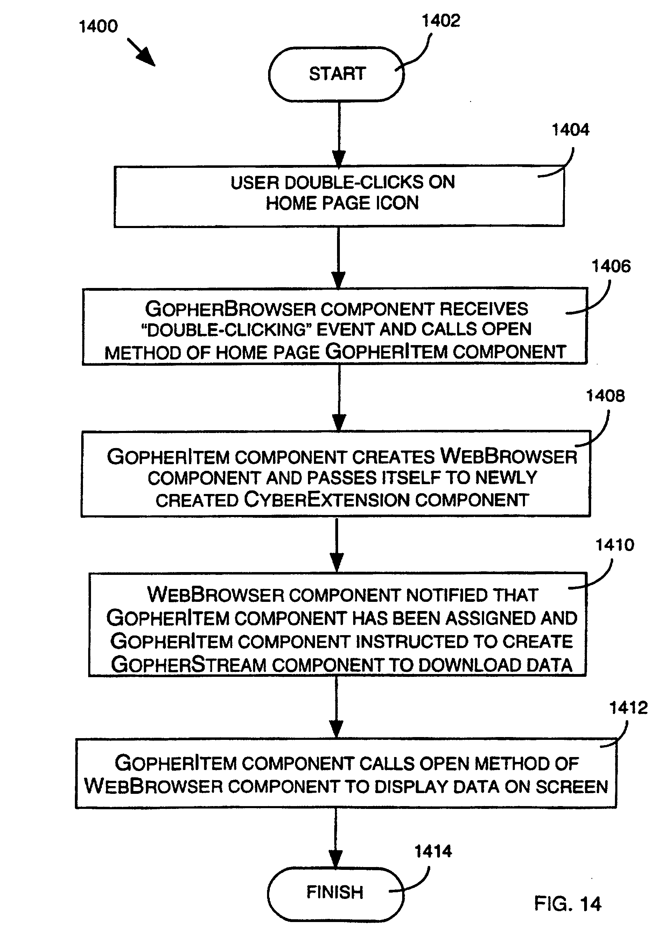

Control of the execution of this process then returns to the GopherItem component 1324 in Fig. 13D. This component, in turn, issues a call to an *Open* method of the WebBrowser component 1320, which causes the downloaded HTML document to appear on the screen (now shown at 1340). For a further understanding of the invention, Fig. 14 provides an illustrative flowchart 1400 of the sequence of steps involved in invoking, and accessing, information from a referenced network resource, as described above.

In summary, the network-oriented component system provides a customizable framework that enables a user to create an encapsulated entity containing a reference to a network resource on a computer network. Advantageously, the inventive encapsulation technique allows a user to simply manipulate visual objects when accessing information on the network. Instead of having to type the destination address of a resource, the user can merely "drag and drop" the icon associated with entity anywhere on the graphical user interface. When the user "double clicks" on the icon, the entity opens up in a window and displays the contents of the resource at that network location. Since the address is encapsulated within the network reference entity, the user does not have to labor with typing of the cumbersome character string.

### The Notebook Component

The CyberExtension class also provides an API for accessing other network-type components, such as the notebooks, and for supporting graphical user interface elements, such as menus. CyberExtension objects are also used by components that display the contents of Cyberltem objects. The CyberNotebookExtension class, on the other hand, provides an API for transposing any component into a notebook component. The methods associated with the CyberNotebook Extension class include (the arguments have been omitted for simplicity):
AddCyberItemToNotebook ();
AddCyberItemsToNotebook ();
ShowNotebookWindow ();
IsNotebookWindowShown ().

In the illustrative embodiment of the invention, the notebook is utilized as a local storage repository on a client computer for users to store (as items) references to places "visited" on the network that are of particular interest. For example, a user may store, in the notebook, a reference to a specific document page on a Web server, or to a picture or text file on an FTP server. Thereafter, to quickly and efficiently return to the locations referenced by the items, the user merely double-clicks on any of the icons representing these stored items. It should be understood that only references to locations or network-based objects may be stored in the notebook; the actual document or file, such as an application or picture, are not typically stored in the notebook.

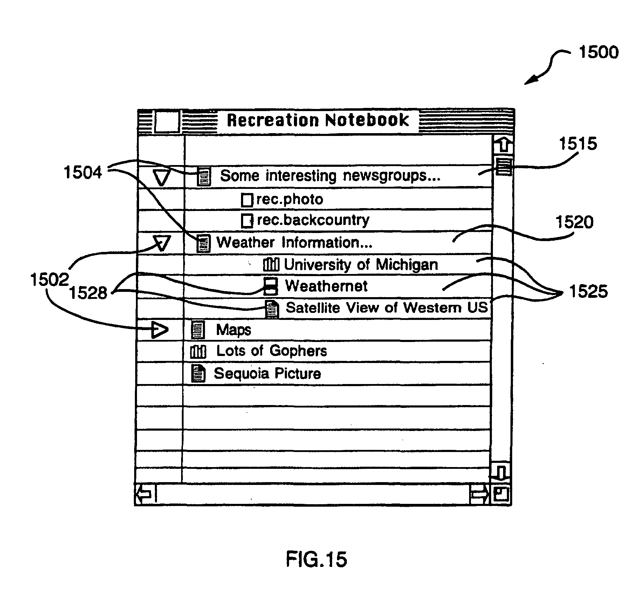

Fig. 15 is a schematic illustration of the contents of the replaceable and extensible notebook component according to the invention. When the notebook 1500 is opened, a list of categories and network item objects are displayed on the screen 235 (Fig. 2) of a computer 200. Categories, such as *Some interesting newsgroups* 1510 and *Weather information* 1520 allow users to separate network item objects 1525 within a notebook component in a logical and useful way. In the illustrative embodiment, each category may be "folded" to display only the category name or "unfolded" to display the category members by clicking on the triangle controls 1502 positioned to the left of the category icons 1504.

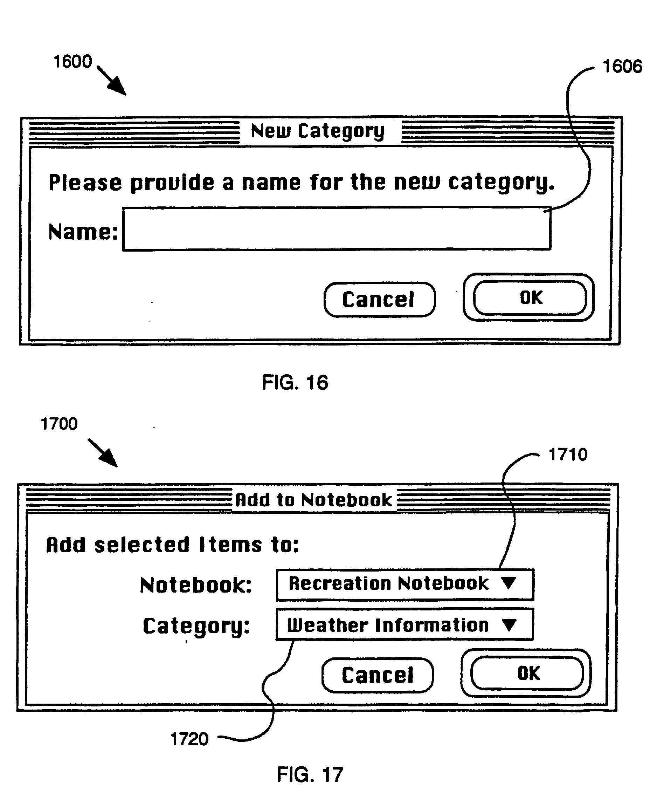

Fig. 16 is a schematic diagram of an illustrative dialog box 1600 used to create a category in the notebook component. Specifically, a user may create a new category in the notebook by, e.g., choosing an "Create New Category" entry from a Notebook menu (not shown) and filling in the desired name in a name field 1606 of the dialog. In addition, any category may be renamed by selecting the desired category from the notebook 1500, choosing a "Rename" entry from the Notebook menu and typing a desired name in a dialog box similar to the one shown in Fig. 17.

As noted, a user may interact with items in the notebook by directly manipulating them. That is, an item may be added to a notebook component by dragging it directly into a notebook window from any system component, such as a network browser, in accordance with the embedding procedure described herein (see description for Figs. 6 and 7). Furthermore, and referring again to Fig. 15, an item 1525 may be placed into a category by dragging and dropping the item's icon 1528 on top of the category icon 1504.

The user may also add items to the notebook using menu commands. If a network item object 1525 is selected, the user may choose an *Add Selected Items to Notebook* entry from the Services menu (not shown) to display a modal dialog box. Fig. 17 is a schematic diagram of an illustrative modal dialog box 1700 which allows the user to specify the particular notebook (*Notebook* field 1710) and the particular category the item should be place in (*Category* field 1720).

In summary, the inventive notebook described herein embodies a component approach to network navigation tools; any service having a corresponding component adapted to the network-oriented component system can utilize the notebook for recording network locations. Advantageously, the notebook component may be efficiently extended, replaced and modified within the network component system. Although monolithic application programs such as Netscape and TurboGopher have functional equivalents to the novel notebook, i.e., tools for recording locations of network resources, each of these applications' notebook is solely their own and, thus, cannot be replaced, extended or modified.

### The Log Component

The CyberExtension class also provides an API for accessing other network-type components, such as the logs, and for supporting graphical user interface elements, such as menus. CyberExtension objects are also used by components that display the contents of CyberItem objects. The CyberLogExtension class, on the other hand, provides an API for transposing any component into a log component. The methods associated with the CyberLogExtension class include (the arguments have been omitted for simplicity):
AddCyberItemToLog ();
ShowLogWindow ();
IsLogWindowShown ();
SetLogFinger ();
ClearLogFinger ().

In the illustrative embodiment of the invention, the network-oriented component system automatically creates a log component on a client computer that maintains a list of all places (as items) that have been visited by a user during a current session, as well as indicating the current locations of those places. This feature of the invention serves many purposes, including (i) providing a method for quickly returning to an interesting location; (ii) creating a sense of the "shape" of the information space; (iii) allowing easy capture of interesting places into additional components, such as a notebook component; and (iv) showing the user's current location.

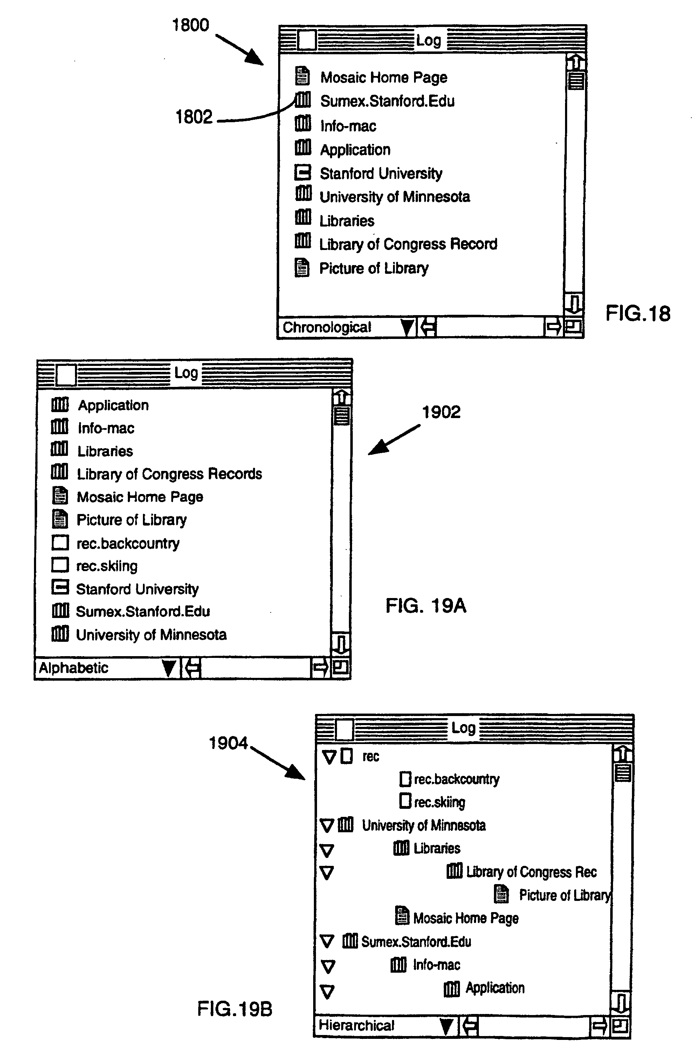

Fig. 18 is a schematic illustration of the contents of the replaceable and extensible log component according to the invention. Preferably, the log 1800 becomes visible when a user chooses a "Show Log" entry from a Services menu (not shown) and the log is displayed in a log window on the screen 235 (Fig. 2) of a computer 200. In the illustrative embodiment, the item objects are preferably displayed as icons 1802 and are listed in a variety of user selectable views. In one of these views, as shown in Fig. 18, the item objects are listed in chronological order, i.e., in the order in which they are "visited". Thus, as the user visits each location on the network, such as by opening a Web page window or "unfolding", i.e., clicking on an icon to display the item, that place is sequentially added to the list in the log.

Figs. 19A and 19B are schematic diagrams of an alphabetic view 1902 and a hierarchical view 1904 for facilitating recollection of the explored locations. This is a useful feature of the invention because a user may not recall the particular location of a resource that was explored while previously "navigating the net". The user may easily return to that location by calling up a log window that displays the route of locations recorded in the log. In addition, the log component retains a predetermined number of places (e.g., 500) before discarding the oldest recorded location. Of course, that number may be modified to increase or decrease the illustrative predetermined limit in accordance with the principles of the invention.

In summary, the inventive log described herein embodies a component approach to network navigation tools; any service having a corresponding component adapted to the network-oriented component system can utilize the log for keeping track of places visited on the computer networks. Advantageously, the log component may be efficiently extended, replaced and modified within the network component system. Although monolithic application programs such as Netscape and TurboGopher have functional equivalents to the log, i.e., tools for keeping track of places explored while navigating the computer networks, each of these applications' notebook is solely their own and, thus, cannot be replaced or extended or modified.

### The Connection Dialog Component

The CyberExtension class also provides an API for accessing other network-type components, such as the connection dialogs, and for supporting graphical user interface elements, such as menus. CyberExtension objects are also used by components that display the contents of Cyberltem objects. The CyberContainerExtension and CyberConnectExtension classes, on the other hand, provide APIs for collectively transposing any component into a connection dialog component. More specifically, the CyberContainerExtension class defines an "outer" portion of the connection dialog component having behaviours that manifest, e.g., as buttons, on the computer screen and the CyberConnectExtension class defines an "inner" portion of the connection dialog component for accessing an address of a network resource.

The methods associated with the CyberContainer Extension and CyberConnectExtension classes include (the arguments have been omitted for simplicity):

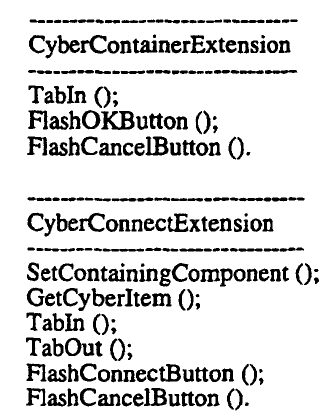

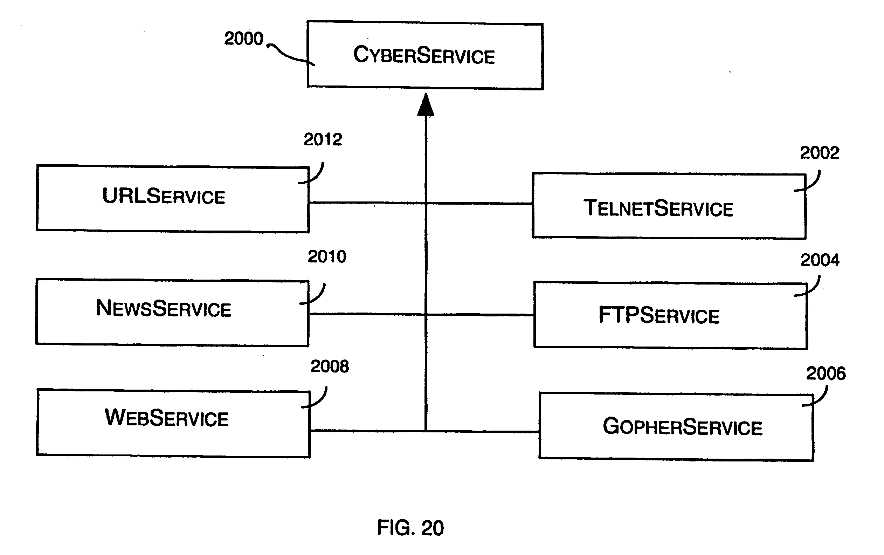

Fig. 20 illustrates a simplified class hierarchy diagram of the class CyberService 2000 that is also used to construct the connection dialog network component. CyberService is an abstraction which, in the illustrative embodiment, creates a CyberService object that provides a "connection" component pertaining to a particular service. The connection component is preferably the inner portion of the connection dialog that is embedded within the connection dialog compound document.

For example, the class GopherService 2006 may be used to construct a Gopher service-type connection component having an associated CyberConnectionExtension object so as to provide Gopher service functionality within the connection dialog. The subclass WebService 2008 is derived from CyberService and encapsulates a connection component object representing a Web service-type connection component. Similarly, the remaining subclasses may be used to construct service objects representing connection components supportable by the connection dialog component.

Since each of the classes used to construct these network connection component objects is a subclass of the CyberService base class, each class inherits the functional operators and methods that are available from that base class. For example, a method associated with the CyberService base class for creating a CyberItem object is assumed by the subclasses to allow the network components to create such objects in a consistent manner. The methods associated with the CyberService base class include (the arguments have been omitted for simplicity):
OwnsURL ();
CreateCyberItem ();
DoMenuCommand ();
HasMenuItem ();
GetName ();
GetMenuName ();
GetConnectPartKind ();
GetIconSuite ();
GetCommandID ();
SetCommandID ();
GetURLScheme ();
SetName ();
SetMenuName ();
SetURLScheme ();
SetConnectPartKind ();
SetIconSuite.

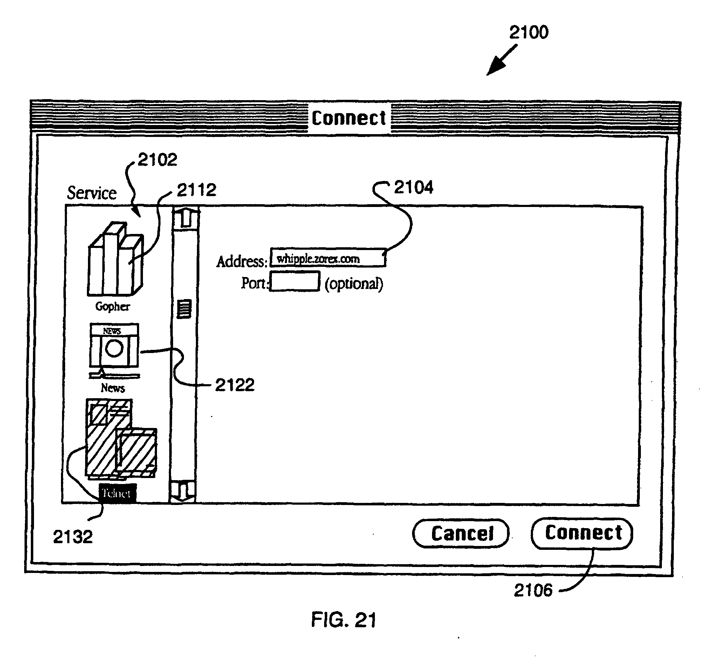

In the illustrative embodiment of the invention, the connection dialog is utilized when a user may have knowledge of a particular computer network (e.g., Internet) address or URL relating to a service and wants to use that address to access the service. Here, the user may choose a "Connect To" entry from a Services menu (not shown) in response to which a dialog box appears on the computer screen 235 (Fig. 2) of a computer 200. Fig. 21 is a schematic illustration of the connection dialog component that is preferably manifested as a dialog box 2100 having a list 2102 of service types selectable by a user along with a field 2104 for receiving address information specified by the user.

Specifically, as shown in Fig. 21, the dialog box 2110 allows a user to select from among a plurality of service types (CyberService objects) represented by icons (e.g., Gopher icon 2112, a NetNews icon 2122 and a Telnet icon 2132) and, thereafter, type appropriate address information into the *Address* field 2104 needed to successfully connect to the particular network resource. It can be seen that the Telnet icon 2132 has been selected by the user. Once the information is specified, the user clicks the *Connect* button 2106 with a pointing device, such as a mouse, and the connection to the resource is created.

More specifically, when the user clicks on, e.g., the Gopher icon 2112 in the service list 2102, the connection dialog responds to that click by determining from the Gopher service that a Gopher dialog view component should be displayed and the dialog proceeds to construct and embed that component within the dialog component, e.g., on the right hand side of the connect dialog box 2100. The Gopher dialog view component has an associated CyberConnectExtension object which defines additional behavior required of components embedded in the connection dialog.

The user then "tabs" through the field(s) of the embedded component as the Gopher dialog view component places the pointer 240 within each field. This allows the user to type the appropriate address information into the dialog box. Thereafter, the user clicks the Connect button 2006, which is the responsibility of the outer component, i.e., the connect dialog. In response to the user clicking the button 2006, the connection dialog requests that the inner Gopher dialog view component's CyberConnectExtension object create a CyberItem. This item is then used by the connection dialog to connect the user to the resource using the address information entered by the user.

The CyberConnectExtension and CyberContainerExtension objects preferably communicate through their APIs by exchanging messages. For example, the GetCyberItem method is used when the user clicks on the connect button 2006. In response to this action, the outer CyberContainerExtension object requests a CyberItem object from the inner CyberConnectExtension object. The CyberConnectExtension object spawns a CyberItem object which is then instructed to open itself to "transport" the user to the network resource location.

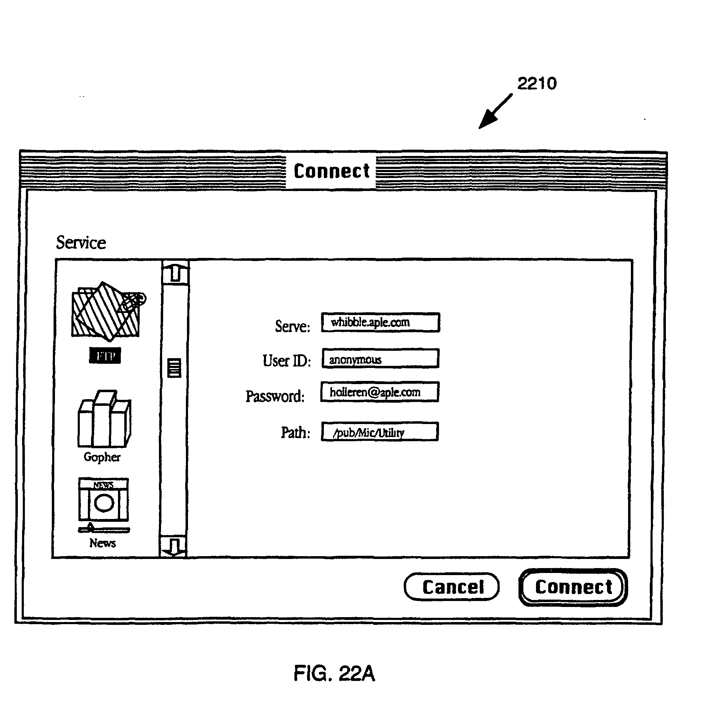

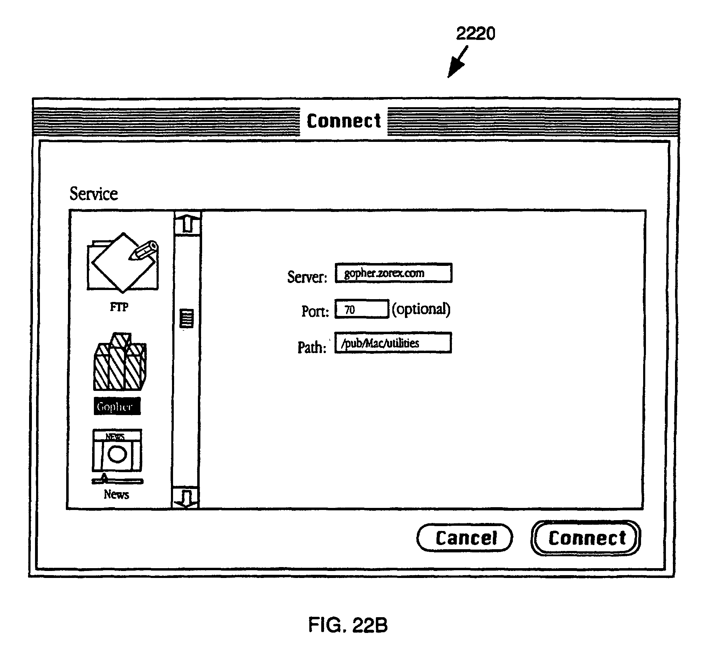

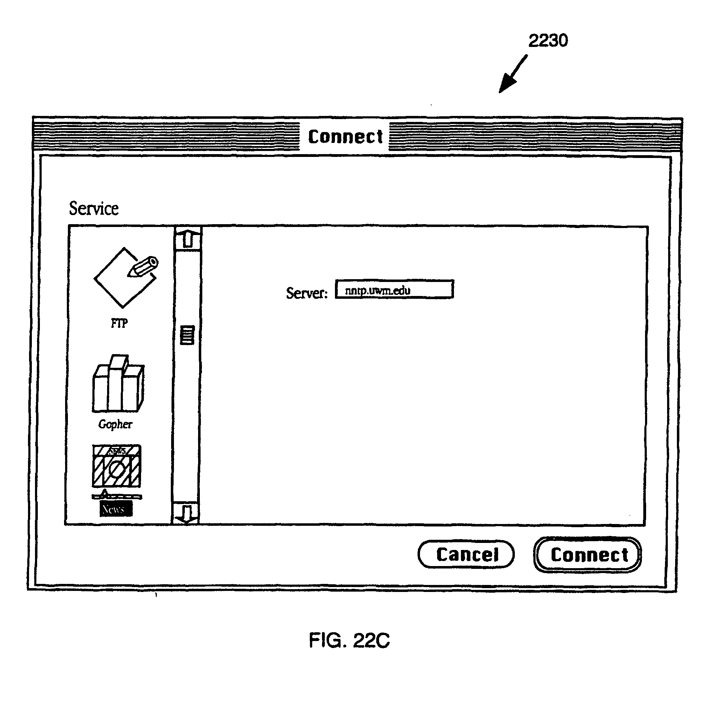

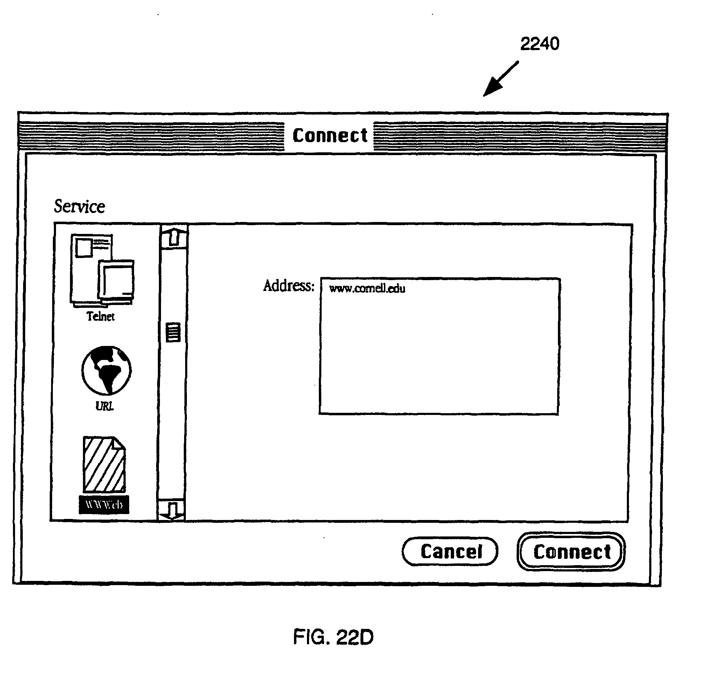

As noted, there are many service types selectable by a user from the connection dialog component; Figs 22A-22D are schematic diagrams depicting illustrative dialog boxes associated with those services, such as the FTP service (shown at 2210 in Fig. 22A); the Gopher service (shown at 2220 in Fig. 22B); the NetNews service (shown at 2230 in Fig. 22C); and the Web service (shown at 2240 in Fig. 22D). In general, each of these services has their own "view" of a dialog box for eliciting the specific information needed to connect to the resource.

In summary, the inventive connection dialog described herein embodies a component approach to network navigation tools; any service having a corresponding component adapted to the network-oriented component system can utilize the connection dialog for accessing network addresses. Advantageously, the connection dialog component may be efficiently extended, replaced and modified within the network component system. Although monolithic application programs such as Netscape and TurboGopher have functional equivalents to the novel connection dialog, i.e., tools for specifying addresses of network resources, each of these applications' address specifying means is solely their own and, thus, cannot be replaced or extended or modified.

### Internet Browser/Buttons Within Components

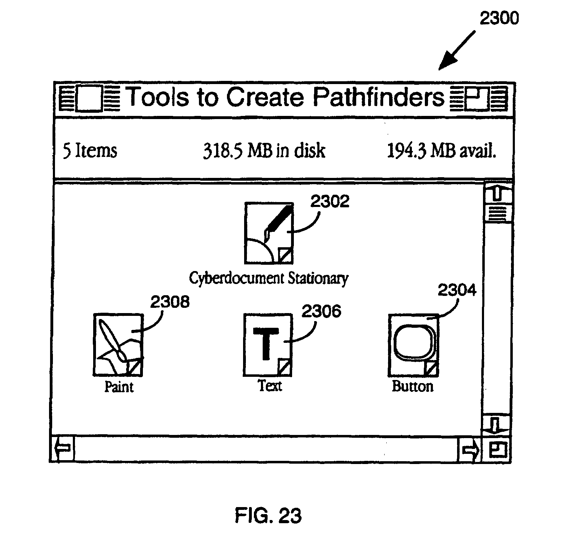

Fig. 23 shows a folder 2300 that may be stored in the memory 214 (Fig. 2) of computer 200 and displayed on a window 244 of a screen 235. The folder preferably contains selected components that a user might employ to build a compound document. For example, the user creates a new document by clicking on the *Cyberdocument stationary* component icon 2302. The document object created by this action is similar to a "draw" or page layout component in that various items may be embedded within locations of the page and easily moved relative to one another. Such a document provides an appropriate base for building a customized network interface.

Once the document is created, the user may embed various components, including buttons and graphics, within the document. According to an aspect of the invention, the component 2304 labeled *Button* is an object that the user may embed into the document by dragging and dropping it at an appropriate location within the document. In addition to the button component 2304, the user may add a text component 2306 (or a graphics component) to enhance the appearance of the document, again by dragging and dropping components to effectuate the embedding process.

According to the invention, the user "wires-up", i.e., associates, the button to a source of information located on the network by creating a network entity component object that references the network location prior to embedding that entity component into the document. The storage of the "wired ?" button is preferred in an object mark as described within reference to Fig. 8, above, abset any invocation information.

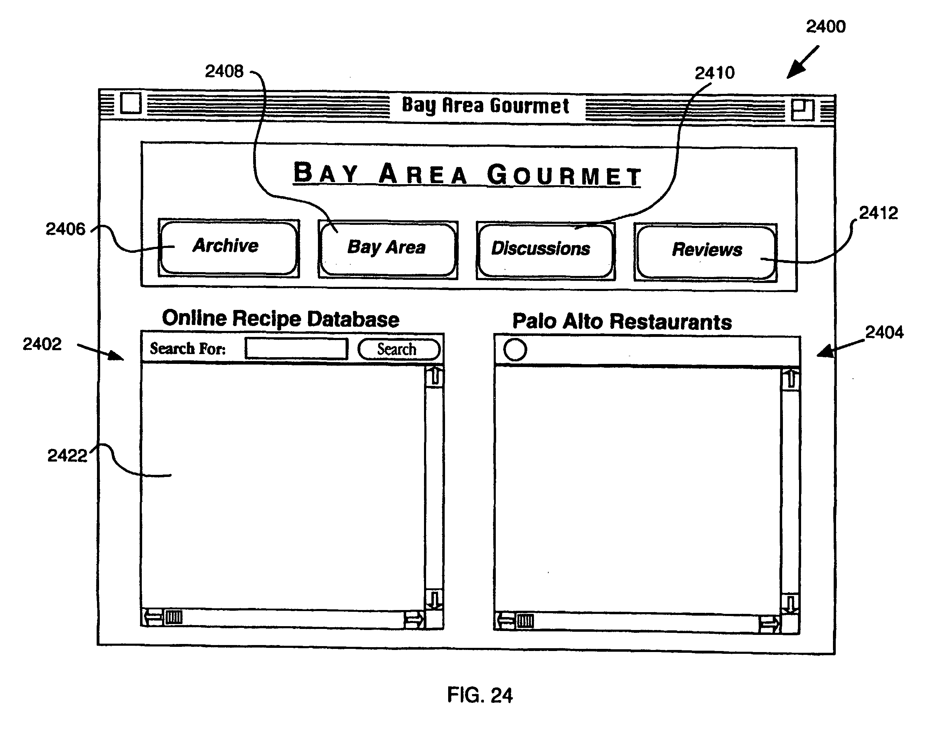

Fig. 24 illustrates a compound document 2400 displayed in a window of a computer screen. Illustratively, the document is a drawing document with a number of embedded network components, in addition to text components representing the cosmetic graphic design of the document. A user may create such a compound document by, e.g., dragging and dropping visual objects representing the components into the document. According to the invention, this action operates to embed the components into the document to thereby generate a customized interface for searching information on the computer networks. Advantageously, the user can create such an interface without knowledge of the protocol required to search for the information.

Specifically, the network components include a search component 2402, a display component 2404 (e.g., a Web page) and four button components, the latter components labeled *Archive* 2406, *Bay Area* 2408, *Discussions* 2410 and *Reviews* 2412. Upon clicking one of these buttons, a process is started that transports the user to a resource on the network, as described herein. The search component 2402 is labeled *Online Recipe Database* and, as its name indicates, is configured to search for items, e.g., a resource, on the network in response to information specified by a user. After locating and accessing the specified item, the component 2402 displays it within a lower area 2422.

The display component 2404 is labeled "Palo Alto Restaurants" and is configured to display a Web page that lists restaurants in the Palo Alto area. By clicking on a particular name of a restaurant displayed on the list, the user is presented with, e.g., menus for that restaurant. Significantly, there is no requirement to invoke a separate application in order to perform the searching and listing functions.

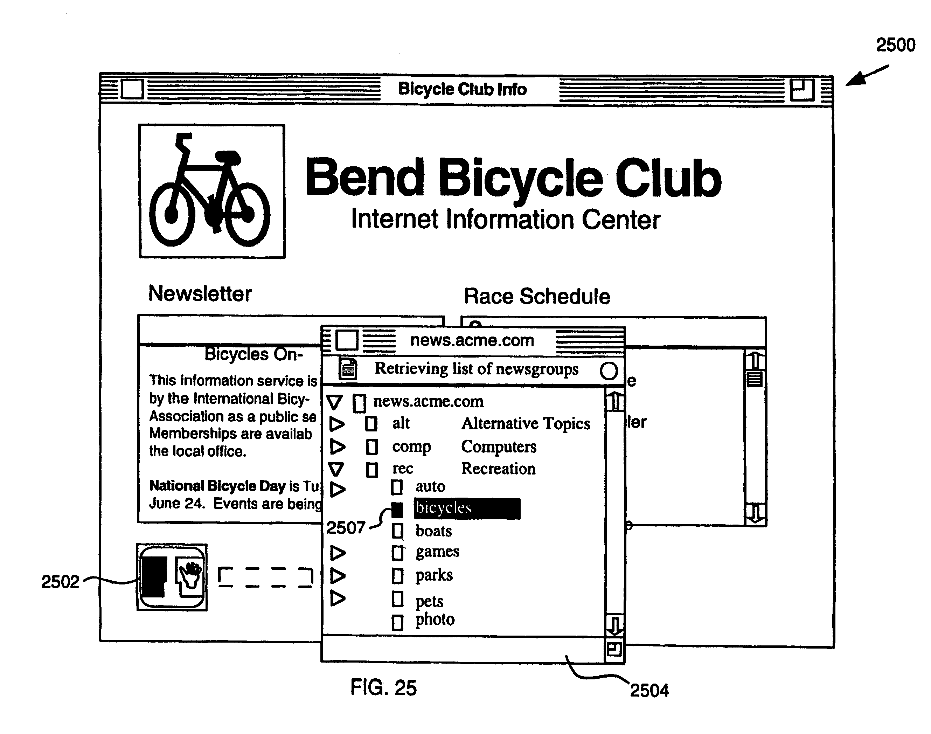

Fig. 25 depicts the connection of a network resource, e.g., a conventional Internet protocol service such as a netnews discussion group, i.e., to a button 2502. Initially, an iconic representation of a button is dragged from the folder 2300 (Fig. 23) onto a document 2500 labeled *Bicycle Club Info*. A graphic picture is added to the button by dragging and dropping a graphic component from a scrapbook of graphic elements (not shown) onto the button.

To connect the button to the network resource, the user further drags a list of postings in a *rec.bicycles* newsgroup onto the button 2502 and releases the list. Specifically, a window 2504 containing that group is opened and the appropriate *bicycles* icon 2506 is dragged onto the button. Upon completion of the "wiring" operation, the window 2504 containing the current list of postings will open whenever the user clicks on the button 2502. The user is further presented with tools (e.g., viewer and editor components of Fig. 12) needed to participate in the discussion, such as for replying to messages and editing text and pictures.

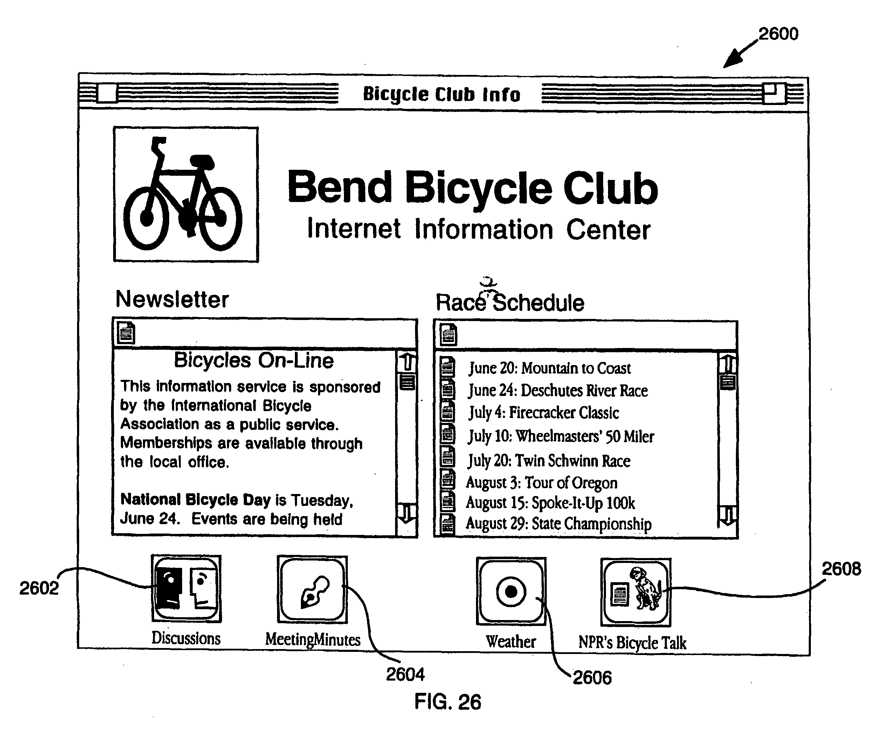

Lastly in Fig. 26, a completed customized network interface document 2600 is created by adding three more buttons 2604-2608 which are defined (and wired) as described above. The completed document may be distributed to users having connections to the network, and the customized network interface 2600 will provide these users with direct access to network resources by merely clicking on corresponding buttons. In other words, clicking on a visual object associated with a network entity and its referenced resource initiates a series of events that results in the desired information from the resource being displayed on the screen. For example, upon clicking on the button, corresponding network entity (CyberItem) object is invoked which, in turn, spawns a data stream (CyberStream) object to obtain the actual information. These two network objects then cooperate to "transport" the user to that network location by displaying the actual information in the embedded compound document object.

While there has been shown and described an illustrative embodiment for implementing an extensible and replaceable network component system, it is to be understood that various other adaptations and modifications may be made within the spirit and scope of the invention. For example, additional system software routines may be used when implementing the invention in various applications. These additional system routines include dynamic link libraries (DLL), which are program files containing collections of window environment and networking functions designed to perform specific classes of operations. These functions are invoked as needed by the software component layer to perform the desired operations. Specifically, DLLs, which are generally well-known, may be used to interact with the component layer and window manager to provide network-specific components and functions.

The foregoing description has been directed to specific embodiments of this invention. It will be apparent, however, that other variations and modifications may be made to the described embodiments, with the attainment of some or all of their advantages. Therefore, it is the object of the appended claims to cover all such variations and modifications as come within the true spirit and scope of the invention.

## Claims

1. Apparatus for efficiently accessing information from a network resource located on a computer network for display on a computer coupled to the network, the network resource having one or more associated data types, each data type being accessible by a corresponding object-oriented software component, the apparatus comprising:
an object-oriented software component architecture layer configured to define at least one network component that integrates the object-oriented software components needed to access the one or more data types associated with the network resource; and
an encapsulated network entity component cooperating with the component architecture layer and containing a reference to the network resource and an identifier for the at least one network component that was defined for the network resource wherein,
the encapsulated network entity component is manifested as a visual object on a display screen of the computer and further wherein,
the encapsulated network entity component is adapted for manipulation by a pointing device of the computer to display contents of the network resource on the screen by invoking the object-oriented software components integrated by the at least one identified network component.

2. The apparatus of Claim 1 further comprising:
an operating system interfacing with the component architecture layer to control the operations of the computer; and
a network component layer coupled to the component architecture layer to form a cooperating component computing arrangement.

3. The apparatus of Claim 2 wherein the cooperating component computing arrangement generates the encapsulated network entity.

4. The apparatus of Claim 3 wherein the reference to the network resource is a pointer that identifies the address of the network resource on a computer network.

5. The apparatus of Claim 4 Wherein the pointer is a uniform resource locator.

6. The apparatus of Claim 5 wherein the uniform resource locator has a first portion that identifies the network resource and a second portion that specifies a means for accessing that resource.

7. The apparatus of Claim 5 wherein the uniform resource locator is a character string that describes a protocol used to address the network resource, a server on which the resource resides, a path to the resource and a resource filename.

8. The apparatus of Claim 4 wherein the pointer is a post office protocol account.

9. The apparatus of any of preceding claim, comprising :
means for generating a document for display on a display screen of a computer that displays information obtained from a resource of a computer network, the display screen having associated therewith a mouse,
means for associating a visual object with a network entity component configured to reference the resource of the computer network;
means for embedding the network entity component within the document by dragging and dropping the visual object onto the document with the mouse; and
means for clicking on the visual object with the mouse to display the information from the resource on the screen,
so as to develop a customized user interface of said computer.

10. The apparatus of Claim 9 wherein the means for associating comprises means for constructing the network entity component containing an address pointer to the resource on the network.

11. The apparatus of Claim 10 wherein the means for clicking comprises:
means for invoking the network entity component;
means for spawning a data stream to obtain the information from the resource; and
means for displaying the information on the document.

12. The apparatus of Claim 11 wherein the means for generating a document comprises a component architecture system of the computer.

13. The apparatus of Claim 12 wherein the visual object comprises one of an icon, a button and an area of the display screen.

14. The apparatus of Claim 13 wherein the means for embedding comprises a network-oriented component system integrated with the component architecture system that enables the document to include mixed data types and formats.

15. The apparatus of claim 1 further comprising:
an extensible and replaceable network-oriented component system for recording locations of resources coupled to computer networks, the system residing on a computer including a component architecture layer interfacing with an operating system to control the operations of the computer, the network-oriented component system including:
a network component layer coupled to the component architecture layer in cooperating relation; and
a notebook component defined by the network component layer for recording a reference to a resource coupled to the computer networks, the notebook component being replaceable and extensible by other notebook-type components in response to the cooperating relationship between the network component layer and the component architecture layer, wherein
said component architecture layer and said network component layer cooperate via an application programming interface to embed components within one another to form a compound document including mixed data types and formats.

16. The apparatus of Claim 15 wherein the reference to the resource coupled to the computer networks is recorded in the notebook component as an item component.

17. The apparatus of Claim 16 wherein the notebook component is a compound document stored on the computer.

18. The apparatus of Claim 16 wherein the notebook and item components are represented by visual objects for manipulation on a computer screen.

19. The apparatus of Claim 18 wherein the visual objects are icons, and wherein the notebook icon may be opened to display the item icon on the screen and the item icon may be opened to display the contents of its referenced resource.

20. The apparatus of Claim 16 wherein the notebook and item components are objects and wherein the network component layer comprises application programming interfaces delivered in the form of objects in a class hierarchy.

21. The apparatus of any of claims 15 to 20, further comprising :
a log component defined by the network component layer for maintaining a list of selected resource locations explored by a user when navigating the computer networks, the log component being replaceable and extensible by other log-type components in response to the cooperating relationship between the network component layer and the component architecture layer,
so as to provide navigation services directed to locations of resources coupled to computer networks.

22. The apparatus of Claim 21 wherein the locations are maintained in the log component as item components.

23. The apparatus of Claim 22 wherein the log component is a compound document stored on the computer.

24. The apparatus of Claim 23 wherein the log and item components are represented by visual objects for manipulation on a computer screen.

25. The apparatus of Claim 21 wherein the visual objects are icons, and wherein the log icon may be opened to display the item icons on the screen and the item icons may be opened to display the contents of the explored locations.

26. The apparatus of Claim 21 wherein the log component further organizes various views of the list of locations displayed on a computer screen to provide a mental routing-map relationship between the explored locations.

27. The apparatus of any of claims 15 to 26, further comprising :
a connection dialog component defined by the network component layer for enabling a user to specify address information of a particular resource coupled to the computer networks, the connection dialog component being replaceable and extensible by other connection dialog-type components in response to the cooperating relationship between the network component layer and the component architecture layer,
indent,
so as to provide services directed to resources coupled to the computer networks.

28. The apparatus of Claim 27 wherein the connection dialog component is manifested on a computer screen as a dialog box having a list of selectable service types with associated dialog view components having at least one field for receiving the address information of the particular resource.

29. The apparatus of Claim 28 wherein the connection dialog component and dialog view components are objects and wherein the network component layer comprises application programming interfaces delivered in the form of objects in a class hierarchy.

30. A method for efficiently accessing information from a network resource located on a computer network for display on a computer system coupled to the network, the network resource having one or more associated data types, each data type being accessible by a corresponding object-oriented software component, the method comprising the steps of :
defining at least one network component that integrates the object-oriented software components needed to access the one or more data types associated with the network resource;
creating an encapsulated entity component containing a reference to a location of the network resource on the computer network, the encapsulated entity component also identifying the at least one network component that was defined for the network resource;
storing the encapsulated entity component as a visual object on the computer system;
in response to manipulation of the visual object with a pointing device, displaying the contents of the network resource on a screen of the computer system by invoking the object-oriented software components integrated by the at least one identified network component.

31. The method of Claim 30 wherein the step of displaying comprises invoking a first network component for displaying the contents of the referenced network resource on the screen, the first network component comprising a browsing component.

32. The method of Claim 31 wherein the step of displaying further comprises invoking a second network component for transferring the contents of the referenced network resource to the first network component, the second network component comprising a data stream component.

33. The method of Claim 32 further comprising a step of creating objects for communication among the encapsulated entity and network components through application programming interfaces.

34. The method of Claim 30 wherein the reference to the network resource is a pointer that identifies the address of the network resource on a computer network.

35. The method of any of claims 30 to 34, further comprising the steps of :
controlling operations of the computer system with an operating system coupled to a component architecture layer of the system;
integrating a network component layer of the computer system with the component architecture layer to provide a cooperating component computing arrangement;
creating a notebook component using the cooperating component computing arrangement, the notebook component comprising a repository for recording items comprising references to network resources connected to the computer networks, the items represented by item icons displayed on a notebook window of a screen of the computer system, wherein said component architecture layer and said network component layer cooperate via an application programming interface to embed components within one another to form a compound document including mixed data types and formats; and
allowing references to selected network resources to be inserted into the notebook component,
so as to record locations of selected network resources of interest to a user of the computer system.

36. The method of Claim 35 further comprising the steps of:
opening the notebook component to display a list of categories for organizing the selected items, the categories represented by category icons displayed on the screen; and one of
folding each category icon to display a category name; and
unfolding each category icon to display selected items of each category.

37. The method of Claim 36 wherein the steps of folding and unfolding comprise the step of clicking on a control positioned adjacent to the category icons using a mouse of the computer system.

38. The method of Claim 35 wherein the cooperating component computing arrangement allows one of replacing, modifying and extending the notebook component with a different notebook-type component to provide the user with a customized network service offering.

39. The method of Claim 36 further comprising the step of allowing a specific item to be added to a specific category by dragging and dropping the item icon of the specific item onto the category icon of the specific category.

40. The method of any of claim 30 to 39, further comprising the steps of :
controlling operations of the computer system with an operating system coupled to a component architecture of the system;
integrating a network component layer of the computer system with the component architecture to provide a cooperating component computing arrangement;
creating a log component using the cooperating component computing arrangement, the log component comprising a document for storing items comprising references to network resource locations recently accessed by the user, the items represented by item icons displayed on a log window of a screen of the computer system; and
displaying predetermined views of routes of selected network resource locations stored in the log component,
so as to provide navigation services directed to selected network resource locations of interest to a user of the computer system.

41. The method of Claim 40 wherein the step of displaying predetermined views comprises the step of displaying an alphabetic view of the routes of selected network resource locations stored in the log component.

42. The method of Claim 40 wherein the step of displaying predetermined views comprises the step of displaying a hierarchical view of the routes of selected network resource locations stored in the log component.

43. The method of Claim 40 wherein the step of displaying predetermined views comprises the step of displaying a chronological view of the routes of selected network resource locations stored in the log component.

44. The method of Claim 40 wherein the cooperating component computing arrangement allows one of replacing, modifying and extending the log component with a different log-type component to provide the user with a customized network service offering.

45. The method of any of claim 30 to 44, further comprising the steps of :
controlling operations of the computer system with an operating system coupled to a component architecture of the system;
integrating a network component layer of the computer system with the component architecture to provide a cooperating component computing arrangement;
creating a connection dialog component using the cooperating component computing arrangement, the connection dialog component enabling the user to specify address information of a particular network resource coupled to the computer networks; and
displaying the connection dialog component as a dialog box on a screen of the computer system, the dialog box having selectable service types represented by service icons,
so as to provide navigation services directed to network resources of interest to a user of the computer system.

46. The method of Claim 45 further comprising the step of selecting a service type of interest to the user by receiving a click on a representative service icon from a pointer device.

47. The method of Claim 46 further comprising the steps of:
constructing a dialog view component in response to the selected service type, the dialog view component defining additional behaviors for manifestation on the computer screen;
embedding the dialog view component within the connection dialog component; and
displaying the embedded dialog view component within the dialog box as a dialog view box on the computer screen, the dialog view component having a plurality of fields for specifying the address information of the particular network resource.

48. The method of any of claim 30 to 47, further comprising the steps of :
generating a document for display on the screen of the computer system that displays information obtained from a resource of a computer network, the display screen having associated therewith a pointing device;
associating a visual object with a network entity component configured to reference the resource of the computer network;
embedding the network entity component within the document by allowing the visual object to be dragged and dropped onto the document with the pointing device; and
receiving a click on the visual object from the pointing device to display the information from the resource on the screen,
so as to develop a customized user interface of the computer.

49. The method of Claim 48 wherein the step of associating comprises the step of constructing the network entity component containing an address pointer to the resource on the network.

50. The method of Claim 48 wherein the step of clicking comprises the steps of:
invoking the network entity component;
spawning a data stream to obtain the information from the resource; and
displaying the information on the document.

## Patentansprüche

1. Vorrichtung zum effizienten Zugreifen auf Information von einer Netzwerkressource, welche sich in einem Computernetzwerk befindet, zur Darstellung auf einem mit dem Netzwerk verbunden Computer, wobei die Netzwerkressource einen oder mehrere zugehörige Datentypen aufweist, wobei auf jeden Datentyp mittels einer entsprechenden objektorientierten Softwarekomponente zugegriffen werden kann, wobei die Vorrichtung folgendes umfasst:
eine Architekturebene für objektorientierte Softwarekomponenten, welche zum Definieren wenigstens einer Netzwerkkomponente eingerichtet ist, die die objektorientierten Softwarekomponenten einbindet, welche zum Zugreifen auf den einen oder die mehreren der Netzwerkressource zugehörigen Datentypen benötigt werden; und
eine gekapselte Netzwerkeinheitskomponente, welche mit der Komponentenarchitekturebene zusammenarbeitet und eine Referenz auf die Netzwerkressource und einen Bezeichner für die mindestens eine Netzwerkkomponente enthält, die für die Netzwerkressource definiert wurde, wobei
die gekapselte Netzwerkeinheitskomponente als ein visuelles Objekt auf einem Bildschirm des Computers manifestiert wird und wobei ferner
die gekapselte Netzwerkeinheitskomponente zur Manipulation durch ein Zeigegerät des Computers zum Darstellen von Inhalten der Netzwerkressource auf dem Bildschirm durch Aufrufen der objektorientierten Softwarekomponenten, welche durch die mindestens eine bezeichnete Netzwerkkomponente eingebunden sind, eingerichtet ist.

2. Vorrichtung nach Anspruch 1, ferner umfassend:
ein Betriebssystem, welches zum Steuern der Operationen des Computers mit der Komponentenarchitekturebene zusammenarbeitet; und
eine Netzwerkkomponentenebene, welche zum Bilden einer Berechnungsanordnung aus zusammenwirkenden Komponenten mit der Komponentenarchitekturebene gekoppelt ist.

3. Vorrichtung nach Anspruch 2, wobei die Berechnungsanordnung aus zusammenwirkenden Komponenten die gekapselte Netzwerkeinheit erzeugt.

4. Vorrichtung nach Anspruch 3, wobei die Referenz auf die Netzwerkressource ein Zeiger ist, der die Adresse der Netzwerkressource in einem Computernetzwerk bezeichnet.

5. Vorrichtung nach Anspruch 4, wobei der Zeiger eine URL (uniform resource locator) ist.

6. Vorrichtung nach Anspruch 5, wobei die URL einen ersten Teil, der die Netzwerkressource bezeichnet, und einen zweiten Teil, der Mittel zum Zugreifen auf diese Ressource spezifiziert, aufweist.

7. Vorrichtung nach Anspruch 5, wobei die URL eine Zeichenkette ist, die ein Protokoll beschreibt, welches zum Adressieren der Netzwerkressource, eines Servers, auf welchem sich die Ressource befindet, eines Pfads zu dieser Ressource und einem Ressourcendateinamen verwendet wird.

8. Vorrichtung nach Anspruch 4, wobei der Zeiger ein Konto für das Postamtsprotokoll (post office protocol account) ist.

9. Vorrichtung nach einem der obigen Ansprüche, umfassend:
Mittel zum Erzeugen eines Dokuments zur Darstellung auf einem Bildschirm eines Computers, das von einer Ressource eines Computernetzwerks erhaltene Information darstellt, wobei dem Bildschirm eine Maus zugeordnet ist,
Mittel zum Zuordnen eines visuellen Objekts zu einer Netzwerkeinheitskomponente, welche zum Referenzieren der Ressource des Computernetzwerks eingerichtet ist;
Mittel zum Einfügen der Netzwerkeinheitskomponente in das Dokument durch Ziehen und Loslassen (dragging and dropping) des visuellen Objekts auf das Dokument mit der Maus; und
Mittel zum Klicken auf das visuelle Objekt mit der Maus zum Darstellen der Information von der Ressource auf dem Bildschirm,
um so eine angepasste Nutzerschnittstelle des Computers zu entwickeln.

10. Vorrichtung nach Anspruch 9, wobei die Mittel zum Zuordnen Mittel zum Einrichten der Netzwerkeinheitskomponente umfassen, welche einen Adresszeiger auf die Ressource im Netzwerk aufweisen.

11. Vorrichtung nach Anspruch 10, wobei die Mittel zum Klicken folgendes umfassen:
Mittel zum Aufrufen der Netzwerkeinheitskomponente;
Mittel zum Erzeugen eines Datenstroms zum Erhalten der Information von der Ressource; und
Mittel zum Darstellen der Information im Dokument.

12. Vorrichtung nach Anspruch 11, wobei die Mittel zum Erzeugen eines Dokuments ein Komponentenarchitektursystem des Computers umfassen.

13. Vorrichtung nach Anspruch 12, wobei das visuelle Objekt ein Symbol, eine Schaltfläche und/oder ein Bereich auf dem Bildschirm umfasst.

14. Vorrichtung nach Anspruch 13, wobei die Mittel zum Einfügen ein netzwerkorientiertes Komponentensystem umfassen, welches in das Komponentenarchitektursystem, das es dem Dokument ermöglicht, gemischte Datentypen und Datenformate aufzuweisen, eingebunden ist.

15. Vorrichtung nach Anspruch 1, ferner umfassend:
ein erweiterbares und austauschbares netzwerkorientiertes Komponentensystem zum Festhalten von Orten von mit Computernetzwerken verbundenen Ressourcen, wobei sich das System auf einem Computer einschließlich einer Komponentenarchitekturebene befindet, welche zum Steuern der Operationen des Computers mit einem Betriebssystem zusammenwirkt, wobei das netzwerkorientierte Komponentensystem folgendes aufweist:
eine in zusammenwirkender Beziehung mit der Komponentenarchitekturebene verbundene Netzwerkkomponentenebene; und
eine durch die Netzwerkkomponentenebene definierte Notizbuchkomponente zum Festhalten einer Referenz auf eine mit Computernetzwerken verbundene Ressource, wobei die Notizbuchkomponente in Reaktion auf die zusammenwirkende Beziehung zwischen der Netzwerkkomponentenebene und der Komponentenarchitekturebene ersetzbar und erweiterbar mittels anderer notizbuchartiger Komponenten ist, wobei
die Komponentenarchitekturebene und die Netzwerkkomponentenebene zum Einfügen von Komponenten ineinander zum Bilden eines zusammengesetzten Dokuments einschließlich gemischter Datentypen und Datenformate über eine Anwendungsprogrammierungsschnittstelle zusammenwirken.

16. Vorrichtung nach Anspruch 15, wobei die Referenz auf die mit den Computernetzwerken verbundene Ressource in der Notizbuchkomponente als eine Elementkomponente festgehalten ist.

17. Vorrichtung nach Anspruch 16, wobei die Notizbuchkomponente ein auf dem Computer gespeichertes zusammengesetztes Dokument ist.

18. Vorrichtung nach Anspruch 16, wobei die Notizbuch- und Elementkomponenten durch visuelle Objekte zum Verändern auf einem Computerbildschirm repräsentiert werden.

19. Vorrichtung nach Anspruch 18, wobei die visuellen Objekte Symbols sind und wobei das Notizbuchsymbol zum Darstellen des Elementsymbols auf dem Bildschirm geöffnet werden kann und wobei das Elementsymbol zum Darstellen der Inhalte seiner referenzierten Ressource geöffnet werden kann.

20. Vorrichtung nach Anspruch 16, wobei die Notizbuch- und Elementkomponenten Objekte sind und wobei die Netzwerkkomponentenebene in der Form von Objekten in einer Klassenhierarchie gelieferte Anwendungsprogrammierungsschnittstellen umfasst.

21. Vorrichtung nach einem der Ansprüche 15 bis 20, ferner umfassend:
eine durch die Netzwerkkomponentenebene definierte Protokollkomponente zum Unterhalten einer Liste ausgewählter, vom Nutzer beim Navigieren durch das Computernetzwerk ausfindig gemachter Ressourcenspeicherstellen, wobei die Protokollkomponente in Reaktion auf die zusammenwirkende Beziehung zwischen der Netzwerkkomponentenebene und der Komponentenarchitekturebene austauschbar oder erweiterbar mittels anderer protokollartiger Komponenten ist,
um so auf Orte von mit Computernetzwerken verbundenen Ressourcen gerichtete Navigationsservices bereitzustellen.

22. Vorrichtung nach Anspruch 21, wobei die Orte in der Protokollkomponente als Elementkomponenten unterhalten werden.

23. Vorrichtung nach Anspruch 22, wobei die Protokollkomponente ein auf dem Computer gespeichertes zusammengesetztes Dokument ist.

24. Vorrichtung nach Anspruch 23, wobei die Protokoll- und Elementkomponenten durch visuelle Objekte zum Verändern auf einem Computerbildschirm repräsentiert werden.

25. Vorrichtung nach Anspruch 21, wobei die visuellen Objekte Symbole sind und wobei das Protokollsymbol zum Darstellen des Elementsymbols auf dem Bildschirm geöffnet werden kann und wobei die Elementsymbole zum Darstellen der Inhalte der ausfindig gemachten Orte geöffnet werden können.

26. Vorrichtung nach Anspruch 21, wobei die Protokoll-Komponente ferner verschiedene Ansichten der Liste von Orten organisiert, welche zum Bereitstellen einer verstandesmäßigen Routingplan-Beziehung zwischen den ausfindig gemachten Orten auf einem Computerbildschirm dargestellt sind.

27. Vorrichtung nach einem der Ansprüche 15 bis 26, ferner umfassend:
eine durch die Netzwerkkomponentenebene definierte Verbindungsdialogkomponente, welche einem Nutzer das Spezifizieren von Adressinformation einer speziellen mit Computernetzwerken verbundenen Ressource ermöglicht, wobei die Verbindungsdialogkomponente in Reaktion auf die zusammenwirkende Beziehung zwischen der Netzwerkkomponentenebene und der Komponentenarchitekturebene austauschbar und erweiterbar mittels anderer verbindungsdialogartiger Komponenten ist,
um so an die mit Computernetzwerken verbundenen Ressourcen gerichtete Services bereitzustellen.

28. Vorrichtung nach Anspruch 27, wobei die Verbindungsdialogkomponente auf einem Computerbildschirm als eine Dialogbox manifestiert ist, welche eine Liste auswählbarer Servicearten mit zugehörigen Dialogansichtskomponenten aufweist, welche mindestens ein Feld zum Empfangen der Adressinformation der speziellen Ressource aufweisen.

29. Vorrichtung nach Anspruch 28, wobei die Verbindungsdialogkomponente und Dialogansichtskomponenten Objekte sind und wobei die Netzwerkkomponentenebene in Form von Objekten in einer Klassenhierarchie gelieferte Anwendungsprogrammierungsschnittstellen umfasst.

30. Verfahren zum effizienten Zugreifen auf Information von einer in einem Computemetzwerk befindlichen Netzwerkressource zur Darstellung auf einem mit dem Netzwerk verbundenen Computersystem, wobei die Netzwerkressource einen oder mehrere zugehörige Datentypen aufweist, wobei auf jeden Datentyp von einer korrespondierenden objektorientierten Softwarekomponente zugegriffen werden kann, wobei das Verfahren folgende Schritte umfasst:
Definieren wenigstens einer Netzwerkkomponente, die die zum Zugreifen auf die einen oder mehreren der Netzwerkressource zugehörigen Datentypen benötigten objektorientierten Softwarekomponenten einbindet;
Erzeugen einer gekapselten Einheitskomponente, welche eine Referenz auf eine Speicherstelle der Netzwerkressource in dem Computernetzwerk aufweist, wobei die gekapselte Einheitskomponente ebenso die wenigstens eine Netzwerkkomponente bezeichnet, die für die Netzwerkressource definiert wurde;
Speichern der gekapselten Einheitskomponente als ein visuelles Objekt auf dem Computersystem;
in Reaktion auf Veränderung des visuellen Objektes mit einem Zeigegerät Darstellen der Inhalte der Netzwerkressource auf einem Bildschirm des Computersystems durch Aufrufen der durch die mindestens eine bezeichnete Netzwerkkomponente eingebundenen objektorientierten Softwarekomponenten.

31. Verfahren nach Anspruch 30, wobei der Schritt des Darstellens das Aufrufen einer ersten Netzwerkkomponente zum Darstellen der Inhalte der referenzierten Netzwerkressource auf dem Bildschirm umfasst, wobei die erste Netzwerkkomponente eine Browser-Komponente umfasst.

32. Verfahren nach Anspruch 31, wobei der Schritt des Darstellens ferner das Aufrufen einer zweiten Netzwerkkomponente zum Übertragen der Inhalte der referenzierten Netzwerkressource zur ersten Netzwerkkomponente umfasst, wobei die zweite Netzwerkkomponente eine Datenstromkomponente umfasst.

33. Verfahren nach Anspruch 32, ferner umfassend einen Schritt zum Erzeugen von Objekten zur Kommunikation zwischen der gekapselten Einheit und Netzwerkkomponenten über Anwendungsprogrammierungsschnittstellen.

34. Verfahren nach Anspruch 30, wobei die Referenz auf die Netzwerkressource ein Zeiger ist, der die Adresse der Netzwerkressource in einem Computernetzwerk bezeichnet.

35. Verfahren nach einem der Ansprüche 30 bis 34, ferner umfassend die Schritte:
Steuern von Operationen des Computersystems mit einem mit einer Komponentenarchitekturebene des Systems angeschlossenen Betriebssystem;
Einbinden einer Netzwerkkomponentenebene des Computersystems in die Komponentenarchitekturebene zum Bereitstellen einer Berechnungsanordnung aus zusammenwirkenden Komponenten;
Erzeugen einer Notizbuchkomponente unter Verwendung der Berechnungsanordnung aus zusammenwirkenden Komponenten, wobei die Notizbuchkomponente einen Speicher für Aufzeichnungselemente umfasst, welche Referenzen auf mit den Computernetzwerken verbundene Netzwerkkomponenten umfassen, wobei die Elemente durch in einem Notizbuchfenster eines Bildschirms des Computersystems dargestellte Elementsymbole repräsentiert werden, wobei die Komponentenarchitekturebene und die Netzwerkkomponentenebene zum Einfügen von Komponenten ineinander zum Bilden eines zusammengesetztes Dokuments einschließlich gemischter Datentypen und Datenformate über eine Anwendungsprogrammierungsschnittstelle zusammenarbeiten; und
Ermöglichen, dass Referenzen auf ausgewählte Netzwerkressourcen in die Notizbuchkomponente eingesetzt werden,
um so Orte ausgewählter Netzwerkressourcen, welche für einen Nutzer des Computersystem von Interesse sind, festzuhalten.

36. Verfahren nach Anspruch 35, ferner umfassend die Schritte:
Öffnen der Notizbuchkomponente zum Darstellen einer Liste von Kategorien zum Organisieren der ausgewählten Elemente, wobei die Kategorien durch auf dem Bildschirm dargestellte Kategoriesymbole repräsentiert sind; und entweder
Einklappen eines jeden Kategoriesymbols zum Darstellen eines Kategorienamens; oder
Ausklappen eines jeden Kategoriesymbols zum Darstellen ausgewählter Elemente jeder Kategorie.

37. Verfahren nach Anspruch 36, wobei die Schritte des Einklappens und Ausklappens den Schritt des Klickens auf eine neben den Kategoriesymbolen positionierte Steuerung unter Verwendung einer Maus des Computersystems umfassen.

38. Verfahren nach Anspruch 35, wobei die Berechnungsanordnung aus zusammenwirkenden Komponenten entweder das Ersetzen, Modifizieren oder Erweitern der Notizbuchkomponente mit einer anderen notizbuchartigen Komponente erlaubt, um ein angepasstes Netzwerkserviceangebot für den Nutzer bereitzustellen.

39. Verfahren nach Anspruch 36, ferner umfassend den Schritt des Ermöglichens, dass ein spezielles Element durch Ziehen und Loslassen (dragging and dropping) des Elementsymbols des spezifischen Elements auf das Kategoriesymbol einer spezifischen Kategorie zu der spezifischen Kategorie hinzu zu fügen.

40. Verfahren nach einem der Ansprüche 30 bis 39, ferner umfassend die Schritte:
Steuern von Operationen des Computersystems mit einem mit der Komponentenarchitektur des Systems verbundenen Betriebssystem;
Einbinden einer Netzwerkkomponentenebene des Computersystems in die Kompotentenarchitektur zum Bereitstellen einer Berechnungsanordnung aus zusammenwirkenden Komponenten;
Erzeugen einer Protokollkomponente unter Verwendung der Berechnungsanordnung aus zusammenwirkenden Komponenten, wobei die Protokollkomponente ein Dokument zum Speichern von Elementen umfasst, welche Referenzen auf Netzwerkressourcenspeicherstellen umfassen, auf welche vor kurzem von einem Nutzer zugegriffen wurde, wobei die Elemente durch in einem Protokollfenster auf einem Bildschirm des Computersystems dargestellte Elementsymbole repräsentiert sind; und
Darstellen vorbestimmter Ansichten von Routen ausgewählter, in der Protokollkomponente gespeicherter Netzwerkressourcenspeicherstellen,
um so an ausgewählte Netzwerkressourcenspeicherstellen gerichtete Navigationsservices bereitzustellen, welche von Interesse für einen Nutzer des Computersystems sind.

41. Verfahren nach Anspruch 40, wobei der Schritt des Darstellens vorbestimmter Ansichten den Schritt des Darstellens einer alphabetischen Ansicht der Routen ausgewählter, in der Protokollkomponente gespeicherter Netzwerkressourcenspeicherstellen umfasst.

42. Verfahren nach Anspruch 40, wobei der Schritt des Darstellens vorbestimmter Ansichten den Schritt des Darstellens einer hierarchischen Ansicht der Routen ausgewählter, in der Protokollkomponente gespeicherter Netzwerkressourcenorte umfasst.

43. Verfahren nach Anspruch 40, wobei der Schritt des Darstellens vorbestimmter Ansichten den Schritt des Darstellens einer chronologischen Ansicht der Routen ausgewählter, in der Protokollkomponente gespeicherter Netzwerkressourcenorte umfasst.

44. Verfahren nach Anspruch 40, wobei die Berechnungsanordnung aus zusammenwirkenden Komponenten entweder das Ersetzen, Modifizieren oder Erweitern der Protokollkomponente mit einer anderen protokollartigen Komponente erlaubt, um ein angepasstes Netzwerkserviceangebot für den Nutzer bereitzustellen.

45. Verfahren nach einem der Ansprüche 30 bis 44, ferner umfassend die Schritte:
Steuern von Operationen des Computersystems mit einem mit einer Komponentenarchitektur des Systems verbundenen Betriebssystem;
Einbinden einer Netzwerkkomponentenebene des Computersystems in die Komponentenarchitektur zum Bereitstellen einer Berechnungsanordnung aus zusammenwirkenden Komponenten;
Erzeugen einer Verbindungsdialogkomponente unter Verwendung der Berechnungsanordnung aus zusammenwirkenden Komponenten, wobei die Verbindungsdialogkomponente es dem Nutzer ermöglicht, Adressinformation einer spezifischen, mit den Computernetzwerken verbundenen Netzwerkressource zu spezifizieren;
Darstellen der Verbindungsdialogkomponente als eine Dialogbox auf einem Bildschirm des Computersystems, wobei die Dialogbox durch Servicesymbole repräsentierte auswählbare Servicearten aufweist,
um so auf Netzwerkressourcen gerichtete Navigationsservices bereitzustellen, welche für Interesse für einen Nutzer des Computersystems sind.

46. Verfahren nach Anspruch 45, ferner umfassend den Schritt des Auswählens einer Serviceart, welche von Interesse für den Nutzer ist, durch Empfangen eines Klicks von einem Zeigegerät auf ein repräsentatives Servicesymbol.

47. Verfahren nach Anspruch 46, ferner umfassend die Schritte:
Einrichten einer Dialogansichtkomponente in Reaktion auf die ausgewählte Serviceart, wobei die Dialogansichtkomponente zusätzliche Handlungsweisen zur Manifestierung auf dem Computerbildschirm definiert;
Einfügen der Dialogansichtkomponente in die Verbindungsdialogkomponente; und
Darstellen der eingefügten Dialogansichtkomponente innerhalb der Dialogbox als eine Dialogansichtbox auf dem Computerbildschirm, wobei die Dialogansichtkomponente eine Mehrzahl von Feldern zur Spezifizierung der Adressinformation der spezifischen Netzwerkressource aufweist.

48. Verfahren nach einem der Ansprüche 30 bis 47, ferner umfassend die Schritte:
Erzeugen eines Dokuments zur Darstellung auf dem Computersystem, das von einer Ressource eines Computernetzwerks erhaltene Information darstellt, wobei dem Bildschirm dafür ein Zeigegerät zugeordnet ist;
Zuordnen eines visuellen Objekts zu einer Netzwerkeinheitskomponente, welche zum Referenzieren der Ressource des Computemetzwerks eingerichtet ist;
Einfügen der Netzwerkeinheitskomponente in das Dokument durch Ermöglichen des Ziehens und Loslassens des visuellen Objekts auf dem Dokument mit dem Zeigegerät; und
Empfangen eines Klicks auf das visuelle Objekt von dem Zeigegerät zum Darstellen der Information von der Ressource auf dem Bildschirm,
um so eine angepasste Nutzerschnittstelle des Computers zu entwickeln.

49. Verfahren nach Anspruch 48, wobei der Schritt des Zuordnens den Schritt des Einrichtens der Netzwerkeinheitskomponente einschließlich eines Adresszeigers auf die Ressource im Netzwerk umfasst.

50. Verfahren nach Anspruch 48, wobei der Schritt des Klickens folgende Schritte umfasst:
Aufrufen der Netzwerkeinheitskomponente;
Erzeugen eines Datenstroms zum Erhalten der Information von der Ressource; und
Darstellen der Information in dem Dokument.

## Revendications

1. Appareil d'accès efficace à une information, à partir d'une ressource de réseau située sur un réseau d'ordinateurs ou en d'autres termes un réseau informatique, pour affichage sur un ordinateur couplé au réseau, un ou plusieurs types de données étant associés à la ressource de réseau, chaque type de données étant accessible par un composant logiciel correspondant orienté objet, l'appareil comprenant:
une couche d'architecture de composants logiciels orientés objet, configurée pour définir au moins un composant du réseau qui intègre les composants logiciels orientés objet nécessaires pour accéder au type ou aux types de données associé(s) à la ressource de réseau; et
un composant encapsulé d'entité de réseau coopérant avec la couche d'architecture de composants et contenant une référence à la ressource de réseau et un identifiant pour le composant de réseau unique au moins qui a été défini pour la ressource de réseau, dans lequel:
le composant encapsulé d'entité de réseau est manifesté sous la forme d'un objet visuel sur un écran d'affichage de l'ordinateur et dans lequel en outre,
le composant encapsulé d'entité de réseau est apte à être manipulé par un dispositif de pointage de l'ordinateur afin d'afficher sur l'écran le contenu de la ressource de réseau en appelant les composants logiciels orientés objet intégrés par le composant identifié unique au moins de réseau.

2. L'appareil selon la revendication 1 qui comprend en outre:
un système d'exploitation en interface avec la couche d'architecture de composants pour commander les opérations de l'ordinateur; et
une couche de composants de réseau couplée à la couche d'architecture de composants pour former un agencement informatique de composants coopérants.

3. L'appareil selon la revendication 2 dans lequel l'agencement informatique de composants coopérants engendre l'entité de réseau encapsulée.

4. L'appareil selon la revendication 3 dans lequel la référence à la ressource de réseau est un pointeur qui identifie l'adresse de la ressource de réseau sur un réseau informatique.

5. L'appareil selon la revendication 4 dans lequel le pointeur est un localisateur de ressource uniforme.

6. L'appareil selon la revendication 5, dans lequel le localisateur de ressource uniforme inclut une première partie qui identifie la ressource de réseau et une deuxième partie qui spécifie un moyen d'accès à cette ressource.

7. L'appareil selon la revendication 5 dans lequel le localisateur de ressource uniforme est une chaîne de caractères qui décrit un protocole utilisé pour adresser la ressource de réseau, un serveur sur lequel la ressource réside, un trajet vers la ressource et un nom de fichier de ressource.

8. L'appareil selon la revendication 4, dans lequel le pointeur est un compte de protocole de bureau de poste.

9. L'appareil selon l'une quelconque des revendications précédentes, qui comprend:
un moyen de génération de document à afficher sur un écran d'affichage d'un ordinateur qui affiche une information obtenue d'une ressource d'un réseau informatique, une souris étant associée à l'écran d'affichage;
un moyen d'association d'un objet visuel avec un composant d'entité de réseau configuré pour référencer la ressource du réseau informatique;
un moyen d'intégration du composant d'entité de réseau à l'intérieur du document en faisant glisser l'objet visuel sur le document et en l'y abandonnant, avec la souris; et
un moyen de déclic sur l'objet visuel au moyen de la souris pour afficher sur l'écran l'information provenant de la ressource;
de façon à développer une interface d'utilisateur personnalisée dudit ordinateur.

10. L'appareil selon la revendication 9 dans lequel le moyen d'association comprend un moyen de construction du composant d'entité de réseau contenant le pointeur d'adresse vers la ressource sur le réseau.

11. L'appareil selon la revendication 10 dans lequel le moyen de déclic comprend:
un moyen d'appel du composant d'entité de réseau;
un moyen de génération dynamique d'un train de données pour obtenir l'information à partir de la ressource; et
un moyen d'affichage de l'information sur le document.

12. L'appareil selon la revendication 11 dans lequel le moyen de génération d'un document comprend un système d'architecture de composants de l'ordinateur.

13. L'appareil selon la revendication 12 dans lequel l'objet visuel comprend, soit une icône, soit un bouton, soit une zone de l'écran d'affichage.

14. L'appareil selon la revendication 13 dans lequel le moyen d'intégration comprend un système de composants orientés réseau, intégré avec le système d'architecture de composants, qui permet au document d'inclure des types et des formats de données mélangés.

15. L'appareil selon la revendication 1 qui comprend en outre
un système extensible et remplaçable de composants orientés réseau pour enregistrer des emplacements de ressources couplées à des réseaux informatiques, le système résidant sur un ordinateur incluant une couche d'architecture de composants en interface avec un système d'exploitation pour commander le fonctionnement de l'ordinateur, le système de composants orientés réseau incluant:
une couche de composants de réseau couplée en relation de coopération à la couche d'architecture de composants; et
un composant de bloc-notes défini par la couche de composants de réseau pour sauvegarder une référence à une ressource couplée aux réseaux informatiques, le composant de bloc-notes étant remplaçable et extensible par d'autres composants du type bloc-notes en réponse à la relation coopérante entre la couche de composants de réseau et la couche d'architecture de composants, dans lequel
ladite couche d'architecture de composants et ladite couche de composants de réseau coopèrent par l'intermédiaire d'une interface de programmation d'application pour intégrer des composants les uns dans les autres afin de former un document composé qui inclut des types et des formats de données mélangés.

16. L'appareil selon la revendication 15 dans lequel la référence à la ressource couplée aux réseaux informatiques est enregistrée dans le composant de bloc-notes en tant que composant d'élément.

17. L'appareil selon la revendication 16 dans lequel le composant de bloc-notes est un document composé enregistré sur l'ordinateur.

18. L'appareil selon la revendication 16 dans lequel le bloc-notes et les composants d'éléments sont représentés par des objets visuels pour manipulation sur un écran d'ordinateur.

19. L'appareil selon la revendication 18, dans lequel des objets visuels sont des icônes, et dans lequel l'icône de bloc-notes peut être ouverte pour afficher sur l'écran l'icône d'élément et l'icône d'élément peut être ouverte pour afficher le contenu de sa ressource référencée.

20. L'appareil selon la revendication 16 dans lequel le bloc-notes et les composants d'éléments sont des objets et dans lequel la couche de composants de réseau comprend des interfaces de programmation d'applications fournies sous la forme d'objets dans une hiérarchie de classes.

21. L'appareil selon l'une quelconque des revendications 15 à 20, qui comprend en outre:
un composant de consignation défini par la couche de composants de réseau pour maintenir une liste d'emplacements de ressources sélectionnées explorée par un utilisateur lorsqu'il navigue sur les réseaux informatiques, le composant de consignation étant remplaçable et extensible par d'autres composants du type consignation en réponse à la relation coopérante entre la couche de composants de réseau et la couche d'architecture de composants,
de façon à fournir des services de navigation dirigés vers des emplacements de ressources couplées aux réseaux informatiques.

22. L'appareil selon la revendication 1 dans lequel les emplacements sont maintenus en tant que composants d'éléments dans le composant de consignation.

23. L'appareil selon la revendication 22 dans lequel le composant de consignation est un document composé enregistré sur l'ordinateur.

24. L'appareil selon la revendication 23 dans lequel les composants de consignation et d'éléments sont représentés par des objets visuels pour manipulation sur un écran d'ordinateur.

25. L'appareil selon la revendication 21 dans lequel les objets visuels sont des icônes, et dans lequel l'icône de consignation peut être ouverte pour afficher sur l'écran les icônes d'éléments et les icônes d'éléments peuvent être ouvertes pour afficher le contenu des emplacements explorés.

26. L'appareil selon la revendication 21 dans lequel le composant de consignation organise en outre diverses visualisations de la liste d'emplacements affichée sur un écran d'ordinateur pour réaliser une relation mentale carte-itinéraire entre les emplacements explorés.

27. L'appareil selon l'une quelconque des revendications 15 à 26, qui comprend en outre:
un composant de dialogue à connexions, défini par la couche de composants de réseau pour permettre à un utilisateur de spécifier une information d'adresse d'une ressource particulière couplée aux réseaux informatiques, le composant de dialogue à connexions étant remplaçable et extensible par d'autres composants du type dialogue à connexions en réponse à la relation coopérante entre la couche de composants de réseau et la couche d'architecture de composants,
de façon à fournir des services dirigés vers des ressources couplées aux réseaux informatiques.

28. L'appareil selon la revendication 27 dans lequel le composant de dialogue à connexions est manifesté sur un écran d'ordinateur sous la forme d'une case de dialogue qui inclut une liste de types de services qui peuvent être sélectionnés avec des composants associés de visualisation de dialogues qui incluent au moins un champ pour recevoir l'information d'adresse de la ressource particulière.

29. L'appareil selon la revendication 28 dans lequel le composant de dialogue à connexions et les composants de visualisation de dialogues sont des objets, et dans lequel la couche de composants de réseau comprend les interfaces de programmation d'applications fournies sous la forme d'objets dans une hiérarchie de classes.

30. Un procédé d'accès efficace à une information provenant d'une ressource de réseau localisée sur un réseau informatique pour affichage sur un système informatique couplé au réseau, un ou plusieurs types de données étant associés à la ressource de réseau, chaque type de données étant accessible par un composant logiciel correspondant orienté objet, le procédé comprenant les étapes consistant à:
définir au moins un composant de réseau qui intègre les composants logiciels orientés objets nécessaires pour accéder au type ou aux types de données associés avec la ressource du réseau;
créer un composant d'entité encapsulée contenant une référence à un emplacement de la ressource de réseau sur le réseau informatique, le composant d'entité encapsulé identifiant aussi le composant unique au moins de réseau qui a été défini pour la ressource de réseau;
enregistrer le composant d'entité encapsulé sous forme d' objet visuel sur le système informatique; et
en réponse à une manipulation de l'objet visuel au moyen d'un dispositif de pointage, afficher le contenu de la ressource de réseau sur un écran du système informatique en appelant les composants logiciels orients objet intégrés par le composant de réseau identifié unique au moins.

31. Le procédé selon la revendication 30 dans lequel l'étape d'affichage comprend l'étape consistant à appeler un premier composant de réseau pour afficher sur l'écran le contenu de la ressource de réseau référencée, le premier composant de réseau comprenant un composant de navigation.

32. Le procédé selon la revendication 31 dans lequel l'étape d'affichage comprend en outre l'étape consistant à appeler un deuxième composant de réseau pour transférer le contenu de la ressource de réseau référencée au premier composant de réseau, le deuxième composant de réseau comprenant un composant de train de données.

33. Le procédé selon la revendication 32 qui comprend en outre une étape consistant à créer des objets pour communication entre l'entité encapsulée et les composants de réseau par l'intermédiaire d'interfaces de programmation d'applications.

34. Le procédé selon la revendication 30 dans lequel la référence à la ressource de réseau est un pointeur qui identifie l'adresse de la ressource de réseau sur un réseau informatique.

35. Le procédé selon l'une quelconque des revendications 30 à 34 qui comprend en outre les étapes consistant à:
commander des opérations du système informatique au moyen d'un système d'exploitation couplé à une couche d'architecture de composants du système;
intégrer une couche de composants de réseau du système informatique avec la couche d'architecture de composants pour réaliser un agencement informatique de composants coopérants,
créer un composant de bloc-notes en utilisant l'agencement informatique de composants coopérants, le composant de bloc-notes comprenant un gisement de données pour enregistrer des éléments comprenant des références à des ressources de réseaux connectées aux réseaux informatiques, les éléments étant représentés par des icônes d'éléments affichées sur une fenêtre de bloc-notes d'un écran du système informatique, dans lequel ladite couche d'architecture de composants et ladite couche de composants de réseaux coopèrent par l'intermédiaire d'une interface de programmation d'applications pour intégrer les composants les uns dans les autres afin de former un document composé qui inclut des types et des formats de données mélangés; et
permettre que des références à des ressources sélectionnées de réseaux soient insérées dans le composant de bloc-notes,
de façon à enregistrer des emplacements de ressources sélectionnées de réseaux intéressantes pour un utilisateur du système informatique.

36. Le procédé selon la revendication 35 qui comprend en outre les étapes consistant à:
ouvrir le composant de bloc-notes pour afficher une liste de catégories pour organiser les éléments sélectionnés, les catégories étant représentées par des icônes de catégories affichées sur l'écran; et
soit fermer chaque icône de catégorie pour afficher un nom de catégorie;
soit ouvrir chaque icône de catégorie pour afficher des éléments sélectionnés de chaque catégorie.

37. Le procédé selon la revendication 36 dans lequel les étapes de fermeture et d'ouverture comprennent l'étape consistant à cliquer sur une commande positionnée adjacente aux icônes de catégories en utilisant une souris du système informatique.

38. Le procédé selon la revendication 35, dans lequel l'agencement informatique de composants coopérants permet, soit de remplacer, soit de modifier, soit d'étendre le composant de bloc-notes au moyen d'un composant différent du type bloc-notes pour fournir à l'utilisateur une offre de service de réseau personnalisée.

39. Le procédé selon la revendication 36, qui comprend en outre l'étape consistant à permettre à un élément spécifique d'être ajouté à une catégorie spécifique en faisant glisser l'icône d'élément de l'élément spécifique sur l'icône de catégorie de la catégorie spécifique et en l'y abandonnant.

40. Le procédé selon l'une quelconque des revendications 30 à 39 qui comprend en outre les étapes consistant à:
commander des opérations du système informatique au moyen d'un système d'exploitation couplé à une architecture de composants du système;
intégrer une couche de composants de réseaux du système informatique avec l'architecture de composants pour réaliser un agencement informatique de composants coopérants;
créer un composant de consignation en utilisant l'agencement informatique de composants coopérants, le composant de consignation comprenant un document pour enregistrer des éléments comprenant des références à des emplacements de ressources de réseaux auxquels l'utilisateur a accédé récemment, les éléments représentés par les icônes d'éléments étant affichés sur une fenêtre de consignation d'un écran du système informatique; et
afficher des visualisations prédéterminées d'itinéraires d'emplacements, enregistrés dans le composant de consignation, de ressources sélectionnées de réseaux,
de façon à fournir des services de navigation dirigés vers des emplacements de ressources de réseau sélectionnées intéressantes pour l'utilisateur du système informatique.

41. Le procédé selon la revendication 40 dans lequel l'étape d'affichage de visualisations prédéterminées comprend l'étape consistant à afficher une visualisation alphabétique des itinéraires d'emplacements, enregistrés dans le composant de consignation, de ressources sélectionnées de réseaux.

42. Le procédé selon la revendication 40 dans lequel l'étape d'affichage de visualisations prédéterminées comprend l'étape consistant à afficher une visualisation hiérarchique des itinéraires d'emplacements, enregistrés dans le composant de consignation, de ressources sélectionnées de réseaux.

43. Le procédé selon la revendication 40 dans lequel l'étape d'affichage de visualisations prédéterminées comprend l'étape consistant à afficher une visualisation chronologique des itinéraires d'emplacements, enregistrés dans le composant de consignation, de ressources sélectionnées de réseaux.

44. Le procédé selon la revendication 40 dans lequel l'agencement informatique de composants coopérants permet, soit le remplacement, soit la modification, soit l'extension du composant de consignation au moyen d'un composant différent du type consignation pour fournir à l'utilisateur une offre personnalisée de services de réseaux.

45. Le procédé selon l'une quelconque des revendications 30 à 44, qui comprend en outre les étapes consistant à:
commander des opérations du système informatique au moyen d'un système d'exploitation couplé à une architecture de composants du système;
intégrer une couche de composants de réseaux du système informatique avec l'architecture de composants pour réaliser un agencements informatique de composants coopérants;
créer un composant de dialogue à connexions en utilisant l'agencement informatique de composants coopérants, le composant de dialogue à connexions permettant à l'utilisateur de spécifier une information d'adresse d'une ressource particulière de réseau couplée aux réseaux informatiques; et
afficher le composant de dialogue à connexions sous forme de boîte de dialogue sur un écran du système informatique, la boîte de dialogue incluant des types de services qui peuvent être sélectionnés représentés par des icônes de services,
de façon à fournir, à un utilisateur du système informatique, des services de navigation dirigés vers des ressources de réseaux intéressantes.

46. Le procédé selon la revendication 45 qui comprend en outre l'étape consistant à sélectionner un type de service intéressant pour l'utilisateur en recevant d'un dispositif pointeur un déclic sur une icône représentative de service.

47. Le procédé selon la revendication 46 qui comprend en outre les étapes consistant à:
construire un composant de visualisation de dialogue en réponse au type de service sélectionné, le composant de visualisation de dialogue définissant des comportements additionnels pour manifestation sur l'écran d'ordinateur;
intégrer le composant de visualisation de dialogue à l'intérieur du composant de dialogue à connexions; et
afficher sur l'écran d'affichage à l'intérieur de la boîte de dialogue le composant intégré de visualisation de dialogue sous forme de boîte de visualisation de dialogue, le composant de visualisation de dialogue incluant une série de champs pour spécifier l'information d'adresse de la ressource particulière de réseau.

48. Le procédé selon l'une quelconque des revendications 30 à 47, qui comprend en outre l'étape consistant à:
engendrer un document à afficher sur l'écran du système informatique, qui affiche une information obtenue d'une ressource d'un réseau informatique, un dispositif de pointage étant associé à l'écran d'affichage;
associer un objet visuel à un composant d'entité de réseau configuré pour référencer la ressource du réseau informatique;
intégrer le composant d'entité de réseau à l'intérieur du document en permettant que le dispositif de pointage fasse glisser l'objet visuel pour l'amener sur le document et l'y abandonne; et
recevoir du dispositif de pointage un déclic sur l'objet visuel pour afficher sur l'écran l'information provenant de la ressource,
de façon à développer une interface personnalisée d'utilisateur de l'ordinateur.

49. Le procédé selon la revendication 48 dans lequel l'étape d'association comprend l'étape consistant à construire le composant d'entité de réseau qui contient un pointeur d'adresse vers la ressource de réseau.

50. Le procédé selon la revendication 48 dans lequel l'étape de déclic comprend l'étape consistant à:
appeler le composant d'entité de réseau;
engendrer dynamiquement un train de données pour obtenir l'information à partir de la ressource; et
afficher l'information sur le document.
